# EUROPEAN PATENT APPLICATION

(11) **EP 4 763 753 A1**
(43) Date of publication of application: **24.06.2026**
(21) Application number: 25222534.7
(22) Date of filing: 11.12.2025
(51) Int. Cl.: B65G 17/42, B01F 35/10, B65G 23/26, B65G 47/84

(54) **MASTERBATCH BARREL CONVEYING APPARATUS, MASTERBATCH BARREL RIGHTING AND POSITIONING APPARATUS, COLOR BLENDING DEVICE, AND COLOR BLENDING SYSTEM**

(30) Priority: 20.12.2024 CN 202411899393; 20.12.2024 CN 202411899412; 20.12.2024 CN 202423173075 U
(71) Applicant: Zhengzhou Sanhua Technology & Industry Co., Ltd., Zhengzhou, Henan 450121 (CN)
(72) Inventor: Zhang, Kunkun, Zhengzhou City, 450121 (CN); Wang, Bin, Zhengzhou City, 450121 (CN); Ren, Xianwu, Zhengzhou City, 450121 (CN)
(74) Representative: Zenz Patentanwälte Partnerschaft mbB

(57) **Abstract**

The present invention provides a masterbatch barrel conveying apparatus, a masterbatch barrel righting and positioning apparatus, a color blending device, and a color blending system, and belongs to the technical field of automatic dispensing for automotive touch-up paint. The masterbatch barrel conveying apparatus includes a guide rail; a driving wheel set having a rotating shaft; a conveying portion sleeved on the driving wheel set; a masterbatch barrel mounting portion fixed on the conveying portion; a wheel-set driving portion, including a driving motor body and a driving motor output shaft; and a clutch assembly configured to separate and engage the driving wheel set and the wheel-set driving portion, where the clutch assembly includes a clutch motor and a clutch body connected to each other. The clutch motor drives the clutch body to move in a vertical direction; when the clutch body moves to a first position, the driving motor output shaft and the rotating shaft achieve a transmission connection through the clutch body, and the driving wheel set rotates under driving of the driving motor body; and when the clutch body moves to a second position, the clutch body is disconnected from the driving motor output shaft and/or the rotating shaft.

## Description

### CROSS-REFERENCE TO RELATED APPLICATIONS

The present invention claims priority to Chinese Patent Application Nos. 2024118993934, 2024118994123, and 2024231730758, filed with the China National Intellectual Property Administration on December 20, 2024, which are incorporated herein by reference in their entirety.

### TECHNICAL FIELD

The present invention relates to the technical field of coating dispensing equipment, and particularly to the technical field of automatic dispensing for automotive touch-up paint, especially to a masterbatch barrel conveying apparatus, a masterbatch barrel righting and positioning apparatus, a color blending device, and a color blending system.

### BACKGROUND

In the modern coatings industry, automatic dispensing devices are widely applied in the production process of various coatings, such as automotive paint, paint, latex paint, and inks. These devices typically include a plurality of masterbatch barrels and conveying modules. The conveying modules, based on preset formulas, discharge masterbatch paints from the different masterbatch barrels and make the masterbatch paints mix in the relevant containers, thereby obtaining the desired coatings. Such automatic dispensing devices not only improve production efficiency, but also ensure the consistency and stability of the coating quality.

However, some existing automatic dispensing devices still have certain deficiencies during practical application. For example, during conveying of a masterbatch barrel by a conveying module, an elastic pressing plate is adopted to fix the masterbatch barrel. Although this design fixes the masterbatch barrel to a certain extent, a fitting clearance existing between components affects the dispensing accuracy of masterbatch paint discharged under an action of a pumping mechanism for the masterbatch barrels.

Therefore, designing a novel masterbatch barrel fixing structure to eliminate the fitting clearance between the components so as to improve the dispensing accuracy of the masterbatch paint has become a technical problem to be resolved urgently at present.

In addition, traditional automatic dispensing devices generally adopt a mechanical stopping apparatus such as a limit switch to ensure accurate stopping of a masterbatch barrel when the masterbatch barrel moves to a liquid-discharging position.

However, the mechanical stopping apparatus becomes worn after long-term use, leading to reduced stopping accuracy. Therefore, existing automatic dispensing devices have the disadvantage of low stopping accuracy of the masterbatch barrel.

In addition, during a color blending process, traditional automatic dispensing devices further require frequent loading and unloading of the masterbatch barrel. A current masterbatch barrel dismounting structure has a relatively complicated design, and the flexibility and efficiency of dismounting the masterbatch barrel still require improvement.

### SUMMARY

A masterbatch barrel conveying apparatus includes:
a guide rail;
a driving wheel set having a rotating shaft;
a conveying portion sleeved on the driving wheel set;
a masterbatch barrel mounting portion fixed on the conveying portion, where the conveying portion moves along the guide rail under driving of the driving wheel set, so as to drive the masterbatch barrel mounting portion to move synchronously along the guide rail;
a wheel-set driving portion including a driving motor body and a driving motor output shaft; and
a clutch assembly configured to separate and engage the driving wheel set and the wheel-set driving portion, where the clutch assembly includes a clutch motor and a clutch body connected to each other;
the clutch motor drives the clutch body to move in a vertical direction, when the clutch body moves to a first position, the driving motor output shaft and the rotating shaft achieve a transmission connection through the clutch body, and the driving wheel set rotates under driving of the driving motor body; and when the clutch body moves to a second position, the clutch body is disconnected from the driving motor output shaft and/or the rotating shaft.

In one or more embodiments, when the clutch body moves to the second position, the clutch body is disconnected from the rotating shaft.

In one or more embodiments, the clutch assembly further includes a screw rod and a lifting portion arranged on the screw rod, the clutch body is fixed on the lifting portion, and the clutch motor drives the screw rod to rotate so as to drive the lifting portion to move in a first direction.

In one or more embodiments, the clutch assembly further includes a holding rod parallel to the screw rod;
the lifting portion includes a screw-nut seat and a fixing plate fixedly connected to the screw-nut seat, the screw-nut seat is passed by the screw rod and the holding rod, and the fixing plate is fixedly connected to the driving motor body and the clutch body.

In one or more embodiments, the guide rail includes a first semicircular section, a first linear section, a second semicircular section, and a second linear section connected in sequence;
the driving wheel set further includes a driven wheel and a driving wheel connected to the rotating shaft, the driving wheel is located at a center of a circle of the first semicircular section, and the driven wheel is located at a center of a circle of the second semicircular section; and
the conveying portion is sleeved on the driving wheel and the driven wheel.

In one or more embodiments, the masterbatch barrel conveying apparatus further includes:
a first position sensor configured to measure a position of the clutch assembly.

A color blending device includes:
the masterbatch barrel conveying apparatus as described above;
a workbench provided with a material discharge hole; and
a surrounding barrier fixed on the workbench, where the surrounding barrier encloses the masterbatch barrel mounting portion and the guide rail, and the surrounding barrier is provided with an opening at a masterbatch barrel positioning location.

In one or more embodiments, the color blending device further includes:
a lifting platform located below the material discharge hole, where the lifting platform is configured to place a container for receiving color paste flowing from the masterbatch barrel.

In one or more embodiments, the color blending device further includes:
an aligning assembly arranged at the masterbatch barrel positioning location, where the aligning assembly includes an aligning gripper and an aligning motor configured to drive the aligning gripper to move in a horizontal direction, and one end of the aligning gripper away from the aligning motor is provided with a tapered opening.

A color blending system includes:
the color blending device as described above; and
a masterbatch barrel mounted on the masterbatch barrel mounting portion of the color blending device.

In one or more embodiments, the masterbatch barrel mounting portion includes a pulley assembly sleeved on the guide rail, a masterbatch barrel supporting top plate fixed on an upper top surface of the pulley assembly, and a masterbatch barrel baffle arranged on the masterbatch barrel supporting top plate; and
a masterbatch barrel arranged on an upper top surface of the masterbatch barrel supporting top plate includes a barrel body and tabs protruding from the barrel body, and the tabs achieve limiting engagement with the masterbatch barrel baffle along a direction perpendicular to a moving direction, so that the masterbatch barrel moves along the guide rail with the masterbatch barrel mounting portion.

In one or more embodiments, the masterbatch barrel baffle includes a first baffle arranged at a first end of the masterbatch barrel supporting top plate and a second baffle arranged at a second end of the masterbatch barrel supporting top plate, the first baffle and the second baffle are perpendicular to a moving direction of the masterbatch barrel mounting portion on the guide rail; and
the tabs are inserted into a gap formed by the first baffle and the second baffle, thereby forming limiting engagement.

In one or more embodiments, the masterbatch barrel conveying apparatus further includes a power member, and the masterbatch barrel mounting portion further includes:
a link connecting block arranged at a first side of the masterbatch barrel supporting top plate close to the power member, where a limiting groove is recessed on a second side of the link connecting block away from the first side;
a connecting rod horizontally passing through a wall of the limiting groove; and
a connecting-rod fixing block fixed on the power member, where the connecting-rod fixing block is movably sleeved on the connecting rod and inserted into the limiting groove, and the masterbatch barrel mounting portion moves along the guide rail under driving of the power member.

In one or more embodiments, the pulley assembly includes a plurality of bearings, each bearing is provided with a sliding groove, a sliding groove of at least one bearing is engaged with an inner side of the guide rail, and a sliding groove of at least another bearing is engaged with an outer side of the guide rail.

In one or more embodiments, the pulley assembly further includes:
a pulley fixing plate; and
slider bearing shafts protrudingly fixed on a lower bottom surface of the pulley fixing plate, where a number of the slider bearing shafts corresponds to a number of the bearings; and
the bearings are passed by the protruding portions of the slider bearing shafts.

In one or more embodiments, the guide rail is a circular guide rail, the circular guide rail includes two semicircular guide rail sections and two linear guide rail sections, and the two semicircular guide rail sections are connected through the two linear guide rail sections.

In one or more embodiments, the color blending device further includes an aligning assembly, where the aligning assembly includes:
an aligning gripper including a side wall and a gripper portion fixed on the side wall, where one end of the gripper portion away from the side wall is provided with a tapered opening; and
a driving portion connected to the side wall, where the driving portion is configured to drive the side wall to extend and retract in a first direction, when the side wall extends, the gripper portion abuts a handle of a masterbatch barrel on the masterbatch barrel positioning location positioned on the color blending device and rights the masterbatch barrel to a preset liquid-discharging position within a space defined by the tapered opening.

In one or more embodiments, the aligning gripper includes a crossbeam fixed on the side wall and two forward-extending arms extending forward from one end of the crossbeam away from the side wall, where the two forward-extending arms and the crossbeam form the tapered opening.

In one or more embodiments, the two forward-extending arms are engaged with the handle of the masterbatch barrel in a clamping manner, a first gap width of the two forward-extending arms at a first position is greater than a second gap width at a second position, and a first distance from the first position to the crossbeam is greater than a second distance from the second position to the crossbeam.

In one or more embodiments, each of the forward-extending arms includes an outer end surface, a distal end surface away from the crossbeam, an inclined surface, and an inner end surface connected in sequence, and the crossbeam and inclined surfaces and inner end surfaces of the two forward-extending arms enclose to form the tapered opening.

### BRIEF DESCRIPTION OF THE DRAWINGS

To more clearly illustrate the technical solutions of the embodiments of the present invention, the drawings required in the embodiments of the present invention will be briefly described below. It should be understood that the following drawings only illustrate some embodiments of the present invention and therefore should not be considered as limitations of the scope. For those of ordinary skill in the art, other related drawings can be obtained according to these drawings without creative efforts.
FIG. 1 is a schematic diagram of a partial structure of a color blending device according to an embodiment of the present invention from one perspective;
FIG. 2 is a schematic diagram of a partial structure of a color blending device according to an embodiment of the present invention from another perspective;
FIG. 3 is a partial structural schematic diagram along A-A of FIG. 1;
FIG. 4 is a schematic diagram of a partial structure of a color blending device according to an embodiment of the present invention from another perspective;
FIG. 5 is a schematic diagram of a structure of a workbench and some components above the workbench according to an embodiment of the present invention;
FIG. 6 is a schematic diagram of a structure of an embodiment of the present invention including a clutch assembly from another perspective;
FIG. 7 is a sectional view of an embodiment of the present invention including a clutch assembly from another perspective;
FIG. 8 is a schematic diagram of a structure of an embodiment of the present invention including a masterbatch barrel and a masterbatch barrel mounting portion from another perspective;
FIG. 9 is a schematic diagram of a structure of an embodiment of the present invention including a masterbatch barrel mounting portion from another perspective;
FIG. 10 is a schematic diagram of a structure of a masterbatch barrel mounting portion engaged with tabs according to an embodiment of the present invention;
FIG. 11 is a schematic diagram of a structure of a masterbatch barrel mounting portion according to an embodiment of the present invention from another perspective;
FIG. 12 is a schematic diagram of a structure of a masterbatch barrel mounting portion according to an embodiment of the present invention from another perspective;
FIG. 13 is a schematic diagram of a structure of a masterbatch barrel mounting portion according to an embodiment of the present invention from another perspective;
FIG. 14 is a schematic diagram of a structure of an aligning assembly according to an embodiment of the present invention from another perspective;
FIG. 15 is a schematic diagram showing a positional relationship between an aligning assembly and a masterbatch barrel according to an embodiment of the present invention from another perspective;
FIG. 16 is a schematic diagram of a partial structure of a color blending device including a cleaning-box apparatus according to an embodiment of the present invention;
FIG. 17 is a schematic diagram of an overall structure of a masterbatch barrel conveying apparatus according to an embodiment of the present invention;
FIG. 18 is a schematic diagram of a structure of a color blending device including a workbench and some components thereon according to an embodiment of the present invention;
FIG. 19 is a schematic diagram of a slider portion according to an embodiment of the present invention from one perspective;
FIG. 20 is a schematic diagram of a structure of a slider portion engaged with tabs according to an embodiment of the present invention;
FIG. 21 is a schematic diagram of a structure of a slider portion according to an embodiment of the present invention from another perspective;
FIG. 22 is a schematic diagram of a structure of a slider portion according to an embodiment of the present invention from another perspective;
FIG. 23 is a schematic diagram of a structure of a slider portion according to an embodiment of the present invention from another perspective;
FIG. 24 is a schematic diagram of a partial structure of a color blending device according to an embodiment of the present invention from another perspective;
FIG. 25 is a schematic diagram of a partial structure of a color blending device according to an embodiment of the present invention from another perspective;
FIG. 26 is a schematic diagram of a partial structure of a color blending device according to an embodiment of the present invention from another perspective;
FIG. 27 is a partial structural schematic diagram along A-A of FIG. 24;
FIG. 28 is a schematic diagram of a partial structure of a clutch assembly according to an embodiment of the present invention from another perspective;
FIG. 29 is a sectional view of an embodiment of the present invention including a clutch assembly from another perspective;
FIG. 30 is a schematic diagram of a partial structure of a color blending device including a cleaning-box apparatus according to an embodiment of the present invention;
FIG. 31 is a schematic diagram showing a positional relationship between an aligning assembly and a masterbatch barrel according to an embodiment of the present invention from another perspective;
FIG. 32 is a schematic diagram of a structure of an embodiment of the present invention including an aligning assembly from another perspective;
FIG. 33 is a schematic diagram of an overall structure of an embodiment of the present invention including a masterbatch barrel righting and positioning apparatus and a masterbatch barrel;
FIG. 34 is a schematic diagram of a masterbatch barrel righting and positioning apparatus according to an embodiment of the present invention from one perspective;
FIG. 35 is a schematic diagram of a masterbatch barrel righting and positioning apparatus according to an embodiment of the present invention from another perspective;
FIG. 36 is a schematic diagram of a masterbatch barrel righting and positioning apparatus according to an embodiment of the present invention from another perspective;
FIG. 37 is a schematic diagram of a masterbatch barrel righting and positioning apparatus according to an embodiment of the present invention from another perspective;
FIG. 38 is a schematic diagram of a masterbatch barrel righting and positioning apparatus according to an embodiment of the present invention from another perspective;
FIG. 39 is a schematic diagram of a structure of a gripper portion according to an embodiment of the present invention;
FIG. 40 is a schematic diagram of a partial structure of a color blending device according to an embodiment of the present invention from another perspective;
FIG. 41 is a schematic diagram of a partial structure of a color blending device according to an embodiment of the present invention from another perspective;
FIG. 42 is a schematic diagram of a partial structure of a color blending device including a masterbatch barrel mounting portion according to an embodiment of the present invention; and
FIG. 43 is a schematic diagram of a masterbatch barrel mounting portion according to an embodiment of the present invention from another perspective.

### Reference numerals:

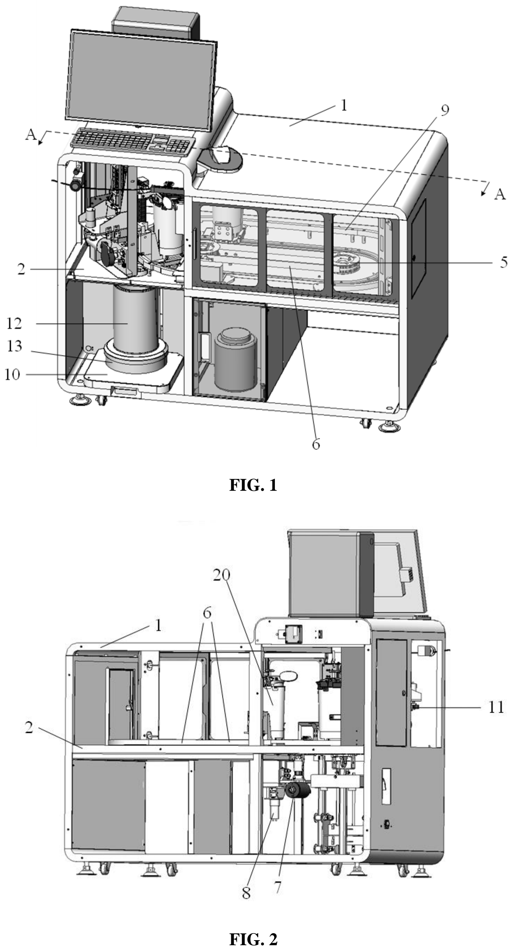

As shown in FIGS. 1 to 16: 1. frame; 2. workbench; 3. guide rail; 4. masterbatch barrel mounting portion; 5. driving wheel set; 6. conveying portion; 7. wheel-set driving portion; 8. clutch assembly; 9. surrounding barrier; 10. lifting platform; 11. aligning assembly; 12. container; 13. electronic scale; 14. cleaning-box apparatus; 20. masterbatch barrel; 2-1. material discharge hole; 4-1. masterbatch barrel fixing member; 4-2. bearing assembly; 5-1. driving wheel; 5-2. driven wheel; 5-3. rotating shaft; 7-1. driving motor body; 7-2. driving motor output shaft; 8-1. mounting frame; 8-2. screw rod; 8-3. holding rod; 8-4. clutch motor; 8-5. screw-nut seat; 8-6. fixing plate; 8-7. clutch body; 11-1. aligning gripper; 11-2. aligning motor; 14-1. box body; 14-2. bristle roller; 14-3. cleaning-box motor; 14-4. splash-preventing upright plate; 20-1. barrel body; 20-2. tab; 20-3. handle; 41. pulley assembly; 411. bearing; 412. pulley fixing plate; 413. slider bearing shaft; 42. masterbatch barrel supporting top plate; 421. first end; 422. second end; 43. masterbatch barrel baffle; 431. first baffle; 432. second baffle; 44. link connecting block; 45. connecting rod; 46. connecting-rod fixing block; and 47. limiting groove.

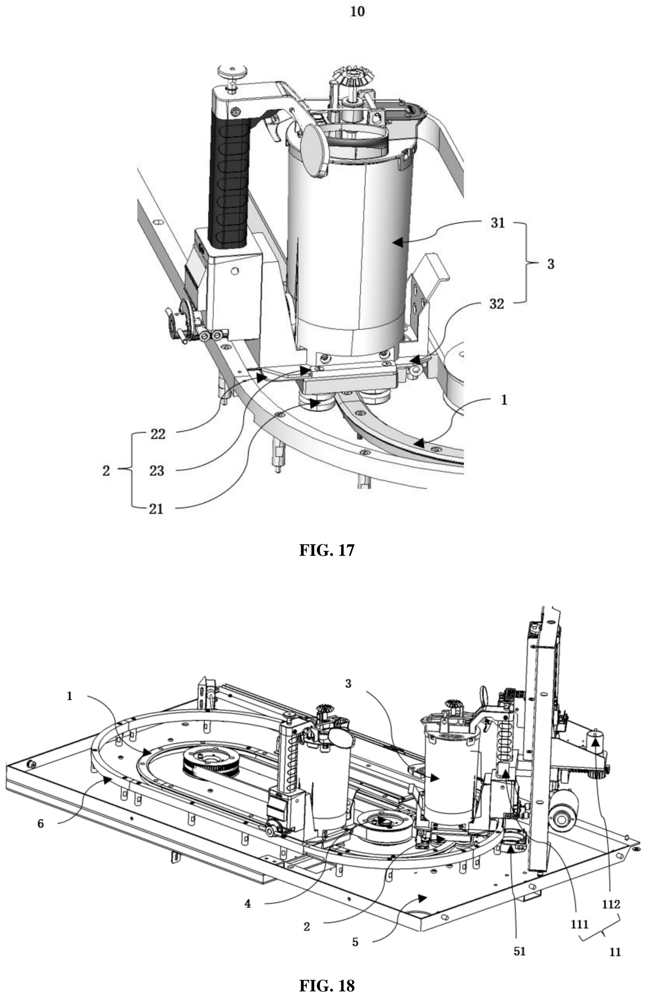

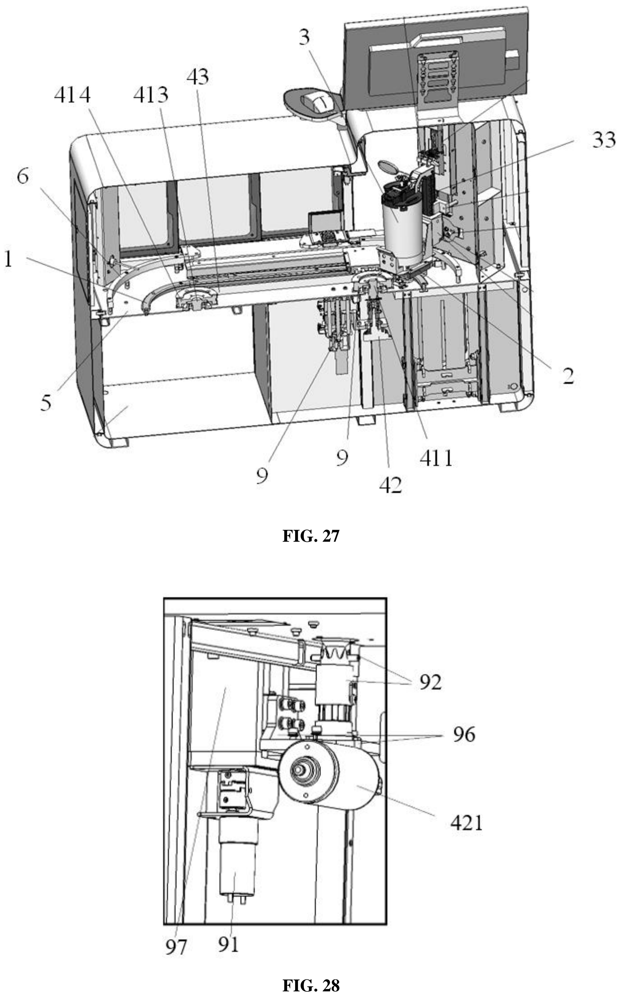

As shown in FIGS. 17 to 32: 100. color blending device; 10. masterbatch barrel conveying apparatus; 1. rail (guide rail); 2. slider portion (masterbatch barrel mounting portion); 21. pulley assembly; 211. bearing; 2111. sliding groove; 212. pulley fixing plate; 213. slider bearing shaft; 22. masterbatch barrel supporting top plate; 221. first end; 222. second end; 23. masterbatch barrel baffle; 231. first baffle; 232. second baffle; 24. link connecting block; 25. connecting rod; 26. connecting-rod fixing block; 27. limiting groove; 3. masterbatch barrel; 31. barrel body; 32. tab; 33. handle; 4. power member; 41. driving wheel set; 411. transmission shaft; 412. driving pulley; 413. driven shaft; 414. driven pulley; 42. wheel-set driving portion; 421. driving motor body; 422. driving motor output shaft; 43. synchronous belt; 5. workbench; 51. material discharge hole; 52. container; 6. surrounding barrier; 7. lifting platform; 8. cleaning-box apparatus; 81. box body; 82. bristle roller; 83. cleaning-box motor; 84. splash-preventing upright plate; 9. clutch assembly; 91. clutch motor; 92. clutch body; 93. screw rod; 94. holding rod; 95. screw-nut seat; 96. fixing plate; 97. mounting frame; 11. aligning assembly; 111. aligning gripper; and 112. aligning motor.

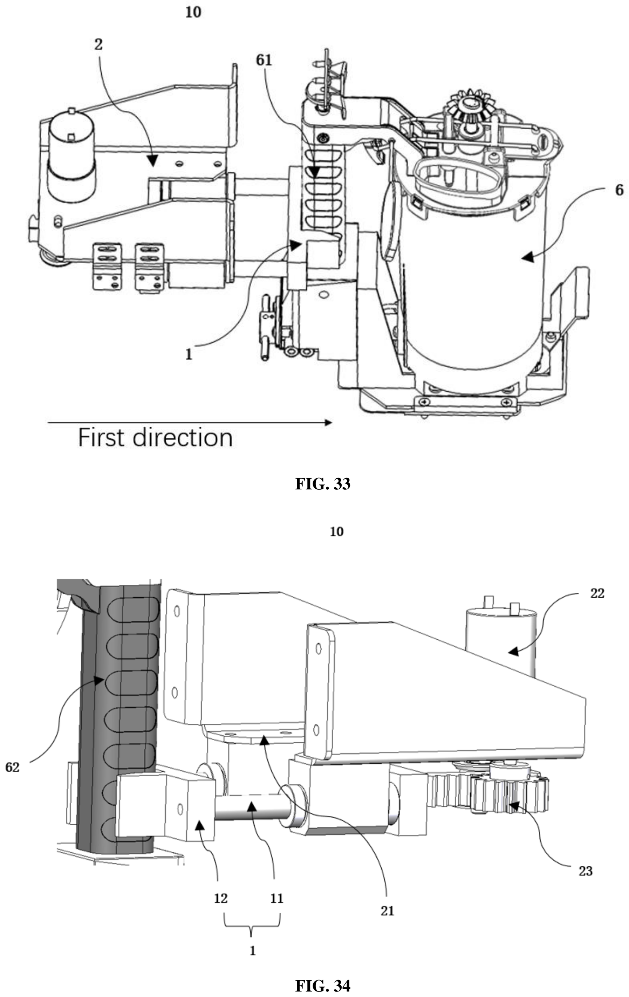

As shown in FIGS. 33 to 43: 100. color blending device; 10. masterbatch barrel righting and positioning apparatus (aligning assembly); 1. righting gripper assembly (aligning gripper); 11. side wall; 12. gripper portion; 121. crossbeam; 122. forward-extending arm; 1221. outer end surface; 1222. distal end surface; 1223. inclined surface; 1224. inner end surface; 123. tapered opening; 124. first position; 125. second position; 126. third position; 2. driving portion; 21. support panel; 211. side wall accommodating portion; 22. driving motor; 23. gear set; 231. gear; 232. rack portion; 2321. rack; 2322. pushing beam; 3. rail (guide rail); 4. conveying portion; 41. transmission shaft; 42. driving pulley; 43. driven shaft; 44. driven pulley; 45. synchronous belt; 5. masterbatch barrel mounting portion; 51. pulley assembly; 511. pulley; 5111. sliding groove; 512. pulley fixing plate; 513. slider bearing shaft; 52. masterbatch barrel supporting top plate; 53. masterbatch barrel baffle; 54. traction assembly; 6. masterbatch barrel; 61. handle; 62. tab; 7. workbench; 71. material discharge hole; and 8. surrounding barrier.

### DETAILED DESCRIPTION OF THE EMBODIMENTS

To make the objectives, technical solutions, and advantages of embodiments of the present invention clearer, the following clearly and completely describes the technical solutions in embodiments of the present invention with reference to the accompanying drawings in embodiments of the present invention. It is clear that the described embodiments are merely some rather than all of embodiments of the present invention. The assemblies of embodiments of the present invention, as generally described and illustrated in the figures herein, can be arranged and designed in a wide variety of different configurations.

Therefore, the following detailed descriptions of the embodiments of the present invention provided in the drawings are not intended to limit the scope of the claimed disclosure, but merely to represent selected embodiments of the present invention. All other embodiments obtained by those of ordinary skill in the art based on embodiments of the present invention without creative efforts shall fall within the protection scope of the present invention.

An objective of the present invention is to provide a novel masterbatch barrel conveying apparatus, a masterbatch barrel righting and positioning apparatus, a color blending device, and a color blending system, so as to solve at least one of the above technical problems.

A masterbatch barrel conveying apparatus includes a guide rail; a driving wheel set having a rotating shaft; a conveying portion sleeved on the driving wheel set;
a masterbatch barrel mounting portion fixed on the conveying portion, where the conveying portion moves along the guide rail under driving of the driving wheel set, so as to drive the masterbatch barrel mounting portion to move synchronously along the guide rail;
a wheel-set driving portion including a driving motor body and a driving motor output shaft; and
a clutch assembly configured to separate and engage the driving wheel set and the wheel-set driving portion, where the clutch assembly includes a clutch motor and a clutch body connected to each other;
the clutch motor drives the clutch body to move in a vertical direction, when the clutch body moves to a first position, the driving motor output shaft and the rotating shaft achieve a transmission connection through the clutch body, and the driving wheel set rotates under driving of the driving motor body; and when the clutch body moves to a second position, the clutch body is disconnected from the driving motor output shaft and/or the rotating shaft.

In one or more embodiments, when the clutch body moves to the second position, the clutch body is disconnected from the rotating shaft.

In one or more embodiments, the clutch assembly further includes a screw rod and a lifting portion arranged on the screw rod, the clutch body is fixed on the lifting portion, and the clutch motor drives the screw rod to rotate so as to drive the lifting portion to move in a first direction.

In one or more embodiments, the clutch assembly further includes a holding rod parallel to the screw rod;
the lifting portion includes a screw-nut seat and a fixing plate fixedly connected to the screw-nut seat, the screw-nut seat is passed by the screw rod and the holding rod, and the fixing plate is fixedly connected to the driving motor body and the clutch body.

In one or more embodiments, the guide rail includes a first semicircular section, a first linear section, a second semicircular section, and a second linear section connected in sequence;
the driving wheel set further includes a driven wheel and a driving wheel connected to the rotating shaft, the driving wheel is located at a center of a circle of the first semicircular section, and the driven wheel is located at a center of a circle of the second semicircular section; and
the conveying portion is sleeved on the driving wheel and the driven wheel.

In one or more embodiments, the masterbatch barrel conveying apparatus further includes: a first position sensor configured to measure a position of the clutch assembly.

A color blending device includes:
the color masterbatch barrel conveying apparatus according to any one of embodiments of the present invention;
a workbench provided with a material discharge hole; and
a surrounding barrier fixed on the workbench, where the surrounding barrier encloses the masterbatch barrel mounting portion and the guide rail, and the surrounding barrier is provided with an opening at a masterbatch barrel positioning location.

In one or more embodiments, the color blending device further includes: a lifting platform located below the material discharge hole, where the lifting platform is configured to place a container for receiving color paste flowing from the masterbatch barrel.

In one or more embodiments, the color blending device further includes:
an aligning assembly arranged at the masterbatch barrel positioning location, where the aligning assembly includes an aligning gripper and an aligning motor configured to drive the aligning gripper to move in a horizontal direction, and one end of the aligning gripper away from the aligning motor is provided with a tapered opening.

A color blending system includes:
the color blending device according to any one of embodiments of the present invention;
a masterbatch barrel mounted on the masterbatch barrel mounting portion of the color blending device.

A masterbatch barrel conveying apparatus includes:
a rail (guide rail);
a slider portion (masterbatch barrel mounting portion) including a pulley assembly sleeved on the rail, a masterbatch barrel supporting top plate fixed on an upper top surface of the pulley assembly, and a masterbatch barrel baffle arranged on the masterbatch barrel supporting top plate; and
a masterbatch barrel arranged on an upper top surface of the masterbatch barrel supporting top plate, including a barrel body and tabs protruding from the barrel body, where the tabs achieve limiting engagement with the masterbatch barrel baffle along a direction perpendicular to a moving direction, so that the masterbatch barrel moves along the rail with the slider portion.

In one or more embodiments, the masterbatch barrel baffle includes a first baffle arranged at a first end of the masterbatch barrel supporting top plate and a second baffle arranged at a second end of the masterbatch barrel supporting top plate, the first baffle and the second baffle are perpendicular to a moving direction of the slider portion on the rail; and
the tabs are inserted into a gap formed by the first baffle and the second baffle, thereby forming limiting engagement.

In one or more embodiments, the first end and/or the second end of the masterbatch barrel supporting top plate is inclined upward in a vertical direction, and the tabs are inclined toward a surface of the masterbatch barrel supporting top plate, so as to engage with the upper top surface of the masterbatch barrel supporting top plate.

In one or more embodiments, the first end is a rear end of the masterbatch barrel supporting top plate along the moving direction, the masterbatch barrel supporting top plate is inclined downward from the first end toward the second end, and the tabs are inclined toward a surface of the masterbatch barrel supporting top plate to engage with the upper top surface of the masterbatch barrel supporting top plate.

In one or more embodiments, the masterbatch barrel conveying apparatus further includes a power member, the slider portion further includes:
a link connecting block arranged at a first side of the masterbatch barrel supporting top plate close to the power member, where a limiting groove is recessed on a second side of the link connecting block away from the first side;
a connecting rod horizontally passing through a wall of the limiting groove; and
a connecting-rod fixing block fixed on the power member, where the connecting-rod fixing block is movably sleeved on the connecting rod and inserted into the limiting groove, and the slider portion moves along the rail under driving of the power member.

In one or more embodiments, the pulley assembly includes a plurality of bearings, each bearing is provided with a sliding groove, a sliding groove of at least one bearing is engaged with an inner side of the rail, and a sliding groove of at least another bearing is engaged with an outer side of the rail.

In one or more embodiments, the pulley assembly further includes:
a pulley fixing plate; and
slider bearing shafts protrudingly fixed on a lower bottom surface of the pulley fixing plate, where a number of the slider bearing shafts corresponds to a number of the bearings; and
the bearings are passed by the protruding portions of the slider bearing shafts.

In one or more embodiments, the rail is a circular rail, the circular rail includes two semicircular rail sections and two linear rail sections, and the two semicircular rail sections are connected through the two linear rail sections.

A color blending device includes:
the masterbatch barrel conveying apparatus as described above;
a workbench provided with a material discharge hole; and
a surrounding barrier fixed on the workbench, where the surrounding barrier encloses the masterbatch barrel conveying apparatus, and the surrounding barrier is provided with an opening at a masterbatch barrel positioning location.

In one or more embodiments, the color blending device further includes:
a lifting platform located below the material discharge hole, where the lifting platform is configured to place a container for receiving masterbatch paint flowing from the masterbatch barrel.

A masterbatch barrel righting and positioning apparatus (aligning assembly) is applied to a color blending device and includes:
an aligning gripper assembly (aligning gripper) including a side wall and a gripper portion fixed on the side wall, where one end of the gripper portion away from the side wall is provided with a tapered opening; and
a driving portion connected to the side wall, where the driving portion is configured to drive the side wall to extend and retract in a first direction, when the side wall extends, the gripper portion abuts a handle of a masterbatch barrel on the masterbatch barrel positioning location positioned on the color blending device and rights the masterbatch barrel to a preset liquid-discharging position within a space defined by the tapered opening.

In one or more embodiments, the aligning gripper assembly includes a crossbeam fixed on the side wall and two forward-extending arms extending forward from one end of the crossbeam away from the side wall, where the two forward-extending arms and the crossbeam form the tapered opening.

In one or more embodiments, the two forward-extending arms are engaged with the handle of the masterbatch barrel in a clamping manner, a first gap width of the two forward-extending arms at a first position is greater than a second gap width at a second position, and a first distance from the first position to the crossbeam is greater than a second distance from the second position to the crossbeam.

In one or more embodiments, each of the forward-extending arms includes an outer end surface, a distal end surface away from the crossbeam, an inclined surface, and an inner end surface connected in sequence, and the crossbeam and inclined surfaces and inner end surfaces of the two forward-extending arms enclose to form the tapered opening.

In one or more embodiments, the side wall includes a first side wall and a second side wall that are parallel to each other, the first side wall is fixed to a first end of the crossbeam, and the second side wall is fixed to a second end of the crossbeam.

In one or more embodiments, the driving portion includes:
a support panel connected to the side wall;
a driving motor fixed to the support panel;
a gear set connected to the driving motor, where the gear set drives the aligning gripper assembly to extend and retract in the first direction under driving of the driving motor.

In one or more embodiments, the support panel is provided with a side wall accommodating portion, and the side wall extends and retracts in the first direction within the side wall accommodating portion;
the gear set includes a gear connected to the driving motor and a rack portion meshing with the gear, the driving motor drives the gear to rotate, and the rack portion extends and retracts in the first direction under rotation of the gear; and
the side wall abuts the rack portion and moves in the first direction with the rack portion.

In one or more embodiments, the rack portion includes a rack disposed along the first direction and a pushing beam fixed perpendicularly to the rack;
the side wall accommodating portion is provided with a side wall accommodating hole, and the side wall passes through the side wall accommodating hole and is fixedly connected to the pushing beam; and the masterbatch barrel righting and positioning apparatus further includes a position detecting portion configured to detect an extended position of the aligning gripper assembly.

A color blending device includes:
the masterbatch barrel righting and positioning apparatus as described above;
a rail (guide rail);
a masterbatch barrel mounting portion sleeved on the rail; and
a conveying portion connected to the masterbatch barrel mounting portion, where
when the masterbatch barrel mounting portion moves with the conveying portion to the masterbatch barrel positioning location, the masterbatch barrel righting and positioning apparatus rights the masterbatch barrel to a preset liquid-discharging position.

In one or more embodiments, the color blending device further includes:
a workbench provided with a material discharge hole; and
a surrounding barrier fixed to the workbench, where the surrounding barrier encloses the rail, and the surrounding barrier is provided with an opening at the preset liquid-discharging position.

In the present invention, the masterbatch barrel conveying apparatus, the color blending device, and the color blending system allow the clutch assembly to be set to a disconnected state when an operator installs or removes a masterbatch barrel, thereby disconnecting transmission between the driving motor output shaft and the rotating shaft. In this case, the operator can easily manually rotate the conveying portion to synchronously move the masterbatch barrel mounting portion near the operator's position, thereby rapidly installing the masterbatch barrel onto the masterbatch barrel mounting portion or removing the masterbatch barrel from the masterbatch barrel mounting portion. After installation of the masterbatch barrel, the clutch assembly is set to a connected state to achieve transmission connection of the driving motor output shaft to the rotating shaft. The driving motor body then sequentially drives the rotating shaft to rotate, thereby driving the conveying portion to rotate and moving the masterbatch barrel to a working position, with the color paste in the masterbatch barrel being dispensed in an orderly and controllable manner through a relevant pumping mechanism. The above masterbatch barrel conveying apparatus is simple and flexible to operate, which improves both the flexibility and efficiency of the installation and removal of the masterbatch barrel.

In the present invention, the masterbatch barrel is limitedly engaged with the masterbatch barrel baffle through the tabs in a direction perpendicular to the moving direction. This design enables the masterbatch barrel to stably follow the slider portion to move along the rail, reducing possible shaking or displacement during conveying and thereby improving the stability of the entire conveying process. Moreover, the limiting engagement defined in the present invention is a rigid connection. Compared with the prior art using an elastic pressing plate, the rigid connection of the present invention eliminates fitting clearances between components, thereby avoiding negative effects on the dispensing accuracy of the masterbatch barrel.

The masterbatch barrel righting and positioning apparatus in the present invention, through cooperation between the driving portion and the gripper portion, can accurately right the masterbatch barrel to a preset liquid-discharging position even when the stop position of the masterbatch barrel lacks sufficient precision. In addition, the tapered opening of the gripper portion ensures stable contact between the gripper portion and the handle of the masterbatch barrel, preventing shaking or deviation during the righting process.

The embodiments of the present invention are further described in combination with the accompanying drawings.

The present invention provides a masterbatch barrel conveying apparatus. Referring to FIGS. 1 to 8, the conveying apparatus includes a guide rail 3, a driving wheel set 5, a conveying portion 6, a masterbatch barrel mounting portion 4, a wheel-set driving portion 7, and a clutch assembly 8.

The guide rail 3 may be a linear guide rail or a circular guide rail. The circular guide rail may have a circular, elliptical, or any other suitable shape. Optionally, the circular guide rail may have curved ends (for example, semicircular) and a linear middle section.

The driving wheel set 5 may include one or more sets of driven wheels, and each driven wheel is connected to a rotating shaft 5-3. The driven wheel rotates under driving of the connected rotating shaft, thereby further driving the conveying portion 6 sleeved on the driven wheel to rotate. The conveying portion 6 may be a conveyor belt or any other suitable conveying component.

One or more masterbatch barrel mounting portions 4 may be provided to install and fix corresponding masterbatch barrels 20. Each masterbatch barrel mounting portion 4 is fixed to a corresponding conveying portion 6 and moves synchronously with the conveying portion 6. The conveying portion moves along the guide rail under driving of the driving wheel set, so as to drive the masterbatch barrel mounting portion to move synchronously along the guide rail.

The conveying portion 6 is sleeved on the driving wheel set 5 and includes an outer side close to the guide rail (away from the driving wheel set) and an inner side away from the guide rail (adjacent to the driving wheel set). The masterbatch barrel mounting portion 4 is provided on the outer side of the conveying portion 6, is located within a space formed between the conveying portion 6 and the surrounding barrier 9, and moves within the space. When a plurality of masterbatch barrel mounting portions are provided, each masterbatch barrel mounting portion may be disposed on the conveying portion uniformly or non-uniformly.

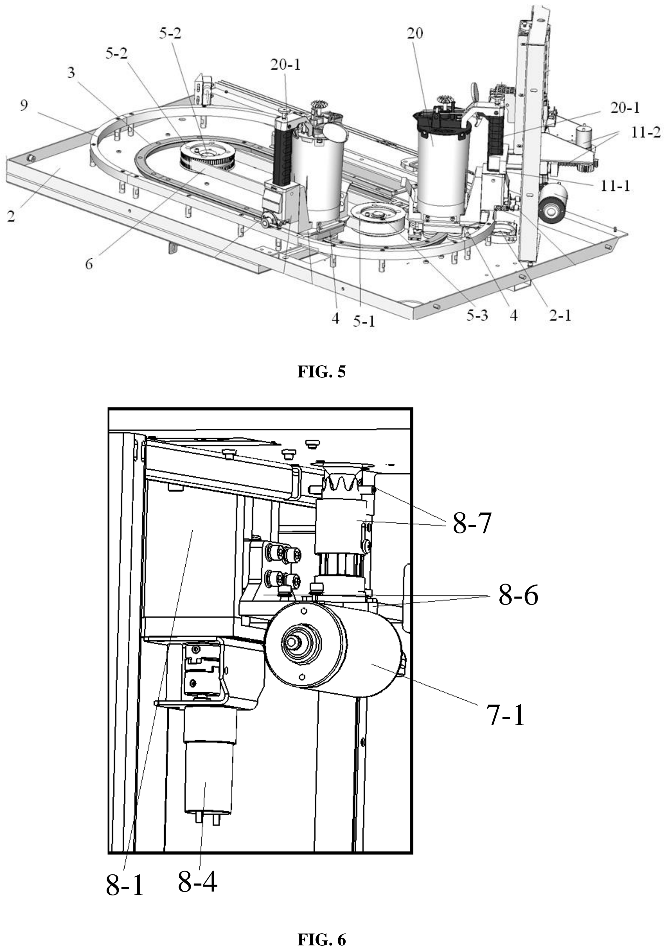

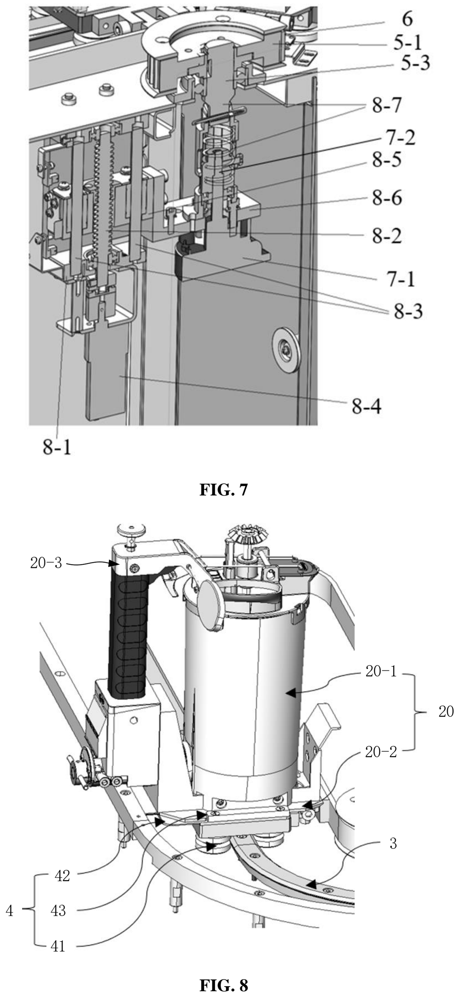

The wheel-set driving portion 7 is configured to drive the rotating shaft 5-3 to rotate, thereby moving the conveying portion and the masterbatch barrel mounting portion along the guide rail 3. As shown in FIGS. 6 and 7, the wheel-set driving portion 7 includes a driving motor body 7-1 and a driving motor output shaft 7-2, and the driving motor body 7-1 may drive the driving motor output shaft 7-2 to rotate. The clutch body 8-7 is transmission-connected to the rotating shaft 5-3 of the driving wheel set 5, so that the rotating shaft 5-3 rotates with rotation of the driving motor output shaft 7-2. The driving motor body may specifically be a turbine-reduction motor.

The clutch assembly 8 is configured to separate and connect the driving wheel set and the wheel-set driving portion, and includes a clutch motor 8-4 and the clutch body 8-7 connected to each other. The clutch motor 8-4 drives the clutch body 8-7 to move in the vertical direction. When the clutch body moves to a first position, the driving motor output shaft is transmission-connected to the rotating shaft through the clutch body, the driving motor body transmits power to the driving wheel set via the clutch body, and the driving wheel set rotates under driving of the driving motor body and drives the conveying portion and the masterbatch barrel mounting portion to move along the guide rail. When the clutch body moves to a second position, the clutch body is disconnected from the driving motor output shaft and/or the rotating shaft. In this case, the driving wheel set, the conveying portion, and the masterbatch barrel mounting portion are no longer driven by the driving motor body, allowing an operator to manually rotate the conveying portion. This design enables the conveying apparatus to be flexibly started or stopped as needed, thereby enhancing the flexibility and reliability of the device.

In this design, the first position refers to a position where the transmission between the rotating shaft and the output shaft is disconnected, and when the clutch body is in the first position, the clutch assembly is in a disconnected state; the second position refers to the position where the transmission between the rotating shaft and the output shaft is connected, and when the clutch body is in the second position, the clutch assembly is in a connected state.

In one embodiment, the masterbatch barrel conveying apparatus further includes a first position sensor configured to measure the position of the clutch assembly. The position measured by the first position sensor is acquired via the associated control component, allowing determination of whether the clutch body has moved to the first position and/or second position, and determination of whether the driving wheel set and the wheel-set driving portion are in a separated state or a connected state.

Specifically, as shown in FIGS. 1 to 5, the driven wheel of the driving wheel set, the conveying portion, and the guide rail are positioned at or near the same horizontal plane, with the clutch assembly located below the horizontal plane of the guide rail. The clutch body 8-7 is fixedly connected to the driving motor output shaft 7-2, and when the clutch motor 8-4 drives the clutch body 8-7 to move in the vertical direction, the driving motor output shaft 7-2 is synchronously driven to move in the vertical direction. In this case, when the clutch body moves to the second position, the clutch body 8-7 is disconnected from the rotating shaft 5-3.

In the present invention, the masterbatch barrel conveying apparatus allows the clutch assembly to be set to a disconnected state when an operator installs or removes a masterbatch barrel, thereby disconnecting transmission between the driving motor output shaft and the rotating shaft. In this case, the operator can easily manually rotate the conveying portion to synchronously move the masterbatch barrel mounting portion near the operator's position, thereby rapidly installing the masterbatch barrel onto the masterbatch barrel mounting portion or removing the masterbatch barrel from the masterbatch barrel mounting portion. After installation of the masterbatch barrel, the clutch assembly is set to a connected state to achieve transmission connection of the driving motor output shaft to the rotating shaft. The driving motor body then sequentially drives the rotating shaft to rotate, thereby driving the conveying portion to rotate and moving the masterbatch barrel to a working position, with the color paste in the masterbatch barrel being dispensed in an orderly and controllable manner through a relevant pumping mechanism.

In one embodiment, the clutch assembly 8 further includes a screw rod 8-2 and a lifting portion arranged on the screw rod, the clutch body is fixed on the lifting portion, and the clutch motor drives the screw rod to rotate so as to drive the lifting portion to move in a first direction.

The clutch assembly 8 may be mounted on the frame 1 of the color blending device. The clutch motor 8-4 is positioned directly below the screw rod 8-2, with threads provided on the screw rod 8-2. The first end of the lifting portion is provided with a threaded hole that matches the threads on the screw rod, and the lifting portion is mounted on the screw rod through the threaded hole. The second end of the lifting portion away from the first end is sleeved and fixed on the driving motor output shaft. The clutch motor 8-4 drives the screw rod 8-2 to rotate. Under the rotation of the screw rod 8-2, the lifting portion moves in the vertical direction, thereby driving the wheel-set driving portion 7 to move up and down synchronously. When the lifting portion moves upward from the second position to the first position, the upper end of the lifting portion is sleeved on the rotating shaft and fixed to the rotating shaft. When the driving motor output shaft rotates, the rotation of the rotating shaft is achieved through the transmission of the lifting portion. The lifting portion may be a single integrated component or may be assembled from a plurality of components.

In one embodiment, the clutch assembly further includes a holding rod parallel to the screw rod; and the lifting portion includes a screw-nut seat and a fixing plate fixedly connected to the screw-nut seat, the screw-nut seat is passed by the screw rod and the holding rod, and the fixing plate is fixedly connected to the driving motor body and the clutch body.

As shown in FIGS. 6 and 7, the clutch assembly 8 further includes a mounting frame 8-1, and a vertical screw rod 8-2 and a holding rod 8-3 arranged parallel thereto are provided in the mounting frame 8-1. The mounting frame 8-1 is provided with a clutch motor 8-4 that drives the rotation of the screw rod 8-2. A screw-nut seat 8-5 is sleeved between the screw rod 8-2 and the holding rod 8-3, and the screw-nut seat 8-5 moves up and down within the mounting frame 8-1 as the screw rod 8-2 rotates under the drive of the clutch motor 8-4.

The two first sensors are respectively positioned on the upper top surface and the lower bottom surface of the mounting frame 8-1, and are configured to measure the position of the screw-nut seat 8-5. The position of the screw-nut seat may be the height of the screw-nut seat or the distance from the upper top surface and/or the lower bottom surface. Since the position of the screw-nut seat is relatively fixed with the position of the clutch body, the position of the clutch body may be obtained once the position of the screw-nut seat is obtained.

A fixing plate 8-6 is mounted on the screw-nut seat 8-5, and a wheel-set driving portion 7 is fixed on the fixing plate 8-6. Specifically, the wheel-set driving portion may pass through a hole in the fixing plate 8-6, allowing the driving motor output shaft 7-2 of the wheel-set driving portion to extend from the upper side of the fixing plate 8-6. The clutch body 8-7 is positioned at the upper end of the fixing plate 8-6 and is sleeved on the driving motor output shaft 7-2.

The output shaft of the driving motor body 7-1 and the lower end of the rotating shaft 5-3 are transmitted through the clutch body 8-7. The clutch body 8-7 may controllably disconnect and connect the transmission between the driving motor body 7-1 and the rotating shaft 5-3 under the driving of the fixing plate 8-6 in the up-and-down direction. The clutch body 8-7 is fixed to the rotating shaft 5-3 by means of engagement or threaded connection during upward movement to the first position, and is separated from the rotating shaft 5-3 during downward movement to the second position.

When the masterbatch barrel needs to be mounted on the masterbatch barrel mounting portion 4, the clutch body 8-7 disconnects the transmission between the driving motor body 7-1 and the rotating shaft 5-3. In this case, an operator can manually rotate the conveying portion 6 to quickly install the masterbatch barrel module onto the masterbatch barrel mounting portion 4 on the conveying portion 6. After installation is completed, the clutch body 8-7 reconnects the transmission between the driving motor body 7-1 and the rotating shaft 5-3, and then the driving motor body 7-1 orderly drives the conveying portion 6 to rotate.

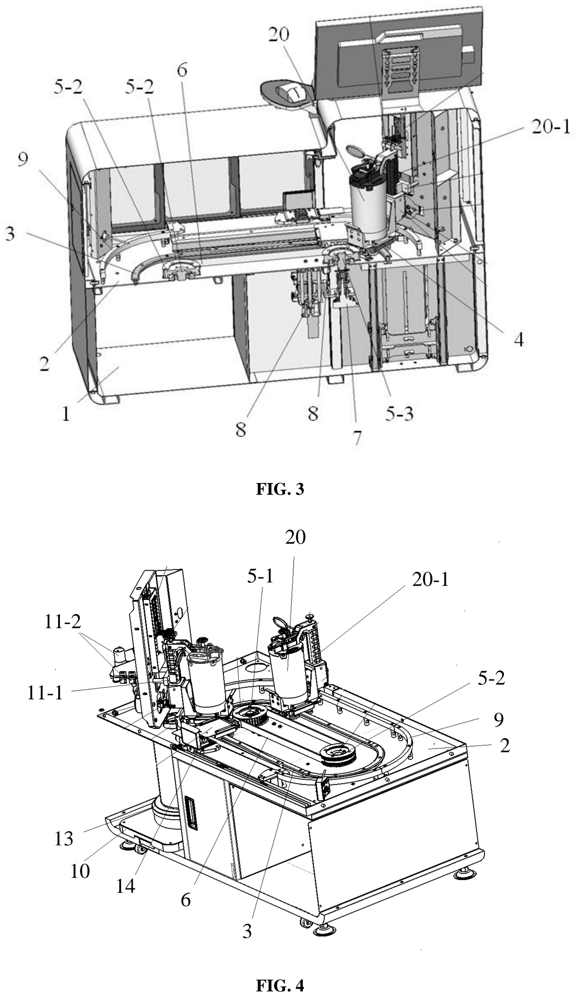

In one embodiment, the guide rail includes a first semicircular section, a first linear section, a second semicircular section, and a second linear section connected in sequence. As shown in FIGS. 4 and 5, the guide rail is a guide rail having semicircular ends and a linear middle portion.

As shown in FIGS. 3, 4, 5, and 7, the driving wheel set 5 further includes a driven wheel 5-2 and a driving wheel 5-1 connected to the rotating shaft 5-3. The driving wheel is located at a center of a circle of the first semicircular section, and the driven wheel is located at a center of a circle of the second semicircular section. The conveying portion is sleeved on the driving wheel and the driven wheel, so that the distance between the conveying portion at each position and the guide rail is the same or substantially the same.

As shown in FIGS. 8 to 13, the masterbatch barrel mounting portion 4 is configured to carry the masterbatch barrel 20 to move along the guide rail 3, and includes a masterbatch barrel fixing member and a pulley assembly 41 located below the masterbatch barrel fixing member. One end of the masterbatch barrel fixing member is fixed to the conveying portion 6, and the masterbatch barrel 20 may be mounted on the masterbatch barrel fixing member. Each pulley assembly 41 is provided with a sliding groove, the sliding groove of at least one pulley assembly 41 is engaged on the inner side of the guide rail 3, and the sliding groove of at least another pulley assembly 41 is engaged on the outer side of the guide rail 3. For example, the pulley assemblies 41 are arranged in two rows, with one row engaged on the outer side of the guide rail and the other row engaged on the inner side of the guide rail. The pulley assemblies 41 can support the masterbatch barrel fixing member on the guide rail, and the masterbatch barrel mounting portion 4 can move on the guide rail 3 along with the rotation of the conveying portion 6.

In one embodiment, the masterbatch barrel fixing member includes a masterbatch barrel supporting top plate 42 fixed on the upper top surface of the pulley assemblies 41 and a masterbatch barrel baffle 43 disposed on the masterbatch barrel supporting top plate 42. The masterbatch barrel supporting top plate 42 is configured to support the masterbatch barrel 20, and the masterbatch barrel baffle 43 is configured to fix the masterbatch barrel 20.

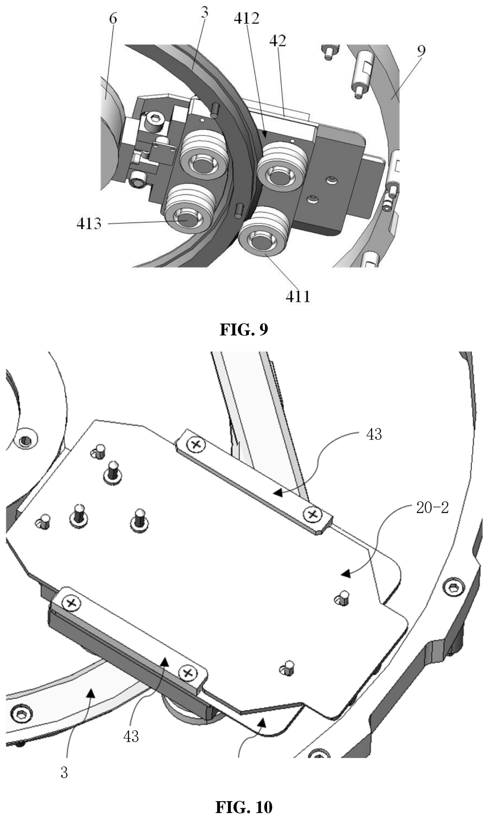

As shown in FIG. 10, the masterbatch barrel 20 is disposed on the upper top surface of the masterbatch barrel supporting top plate 42, and includes a barrel body 20-1 and tabs 20-2 protrudingly provided on the barrel body 20-1. The barrel body 20-1 is a main portion of the masterbatch barrel 20 and is configured to store masterbatch paint; and the tabs 20-2 are provided at the bottom of the barrel body 20-1, with a portion of the tabs protruding horizontally from the barrel body 20-1. The tabs 20-2 are limitedly engaged with the masterbatch barrel baffle 43 in a horizontal direction perpendicular to the moving direction, so that the masterbatch barrel 20 moves along the masterbatch barrel mounting portion 4 on the guide rail 3, thereby reducing shaking or displacement.

In one embodiment, as shown in FIG. 9, the pulley assembly 41 is configured to achieve a moving function, and includes a plurality of bearings 411. Each bearing 411 is provided with a sliding groove, where the sliding groove of at least one bearing 411 is engaged on the inner side of the guide rail 3, and the sliding groove of at least another bearing 411 is engaged on the outer side of the guide rail 3. A sliding groove is annularly disposed on an outer peripheral surface of the bearing 411, and the sliding groove can be rectangular, V-shaped, or U-shaped, depending on a shape of the guide rail 3. With the engagement of the sliding groove with the inner and outer sides of the guide rail 3, the bearing 411 can roll or slide on the guide rail 3, thereby enabling movement of the pulley assembly 41.

In one embodiment, the pulley assembly 41 may further include a pulley fixing plate 412 and slider bearing shafts 413. The pulley fixing plate is configured to fix and support the entire pulley assembly 41, and the number of slider bearing shafts corresponds to the number of bearings 411, and the slider bearing shafts are protrudingly fixed to the lower bottom surface of the pulley fixing plate 412 for mounting the bearings 411. The bearing 411 is sleeved on the protruding portion of the slider bearing shaft 413. This arrangement allows the bearing 411 to rotate freely on the slider bearing shaft 413 while being fixed to the pulley fixing plate 412 via the slider bearing shaft 413.

The pulley assembly 41 not only provides stable support and reduces friction, but also ensures that the masterbatch barrel mounting portion 4 moves smoothly along the guide rail 3, thereby improving the efficiency and reliability of the entire masterbatch barrel conveying apparatus 10.

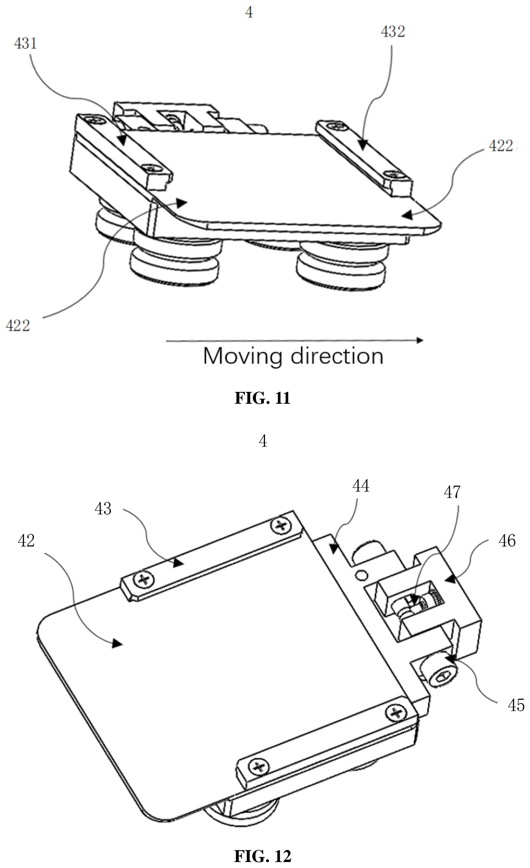

In one embodiment, as shown in FIG. 11, the masterbatch barrel baffle 43 includes a first baffle 431 disposed at a first end 421 of the masterbatch barrel supporting top plate 42 and a second baffle 432 disposed at a second end 422 of the masterbatch barrel supporting top plate 42. The first baffle 431 and the second baffle 432 are perpendicular to the moving direction of the masterbatch barrel mounting portion 4 on the guide rail 3. The tabs 20-2 are inserted into the gap formed by the first baffle 431 and the second baffle 432, forming a limiting engagement.

Specifically, a slot is formed between the masterbatch barrel baffle 43 and the masterbatch barrel supporting top plate 42, and the tabs 20-2 are inserted into the slot between the masterbatch barrel baffle 43 and the masterbatch barrel supporting top plate 42, forming a limiting engagement. A first slot is formed between the first baffle 431 and the first end 421 of the masterbatch barrel supporting top plate 42, and a second slot is formed between the second baffle 432 and the second end 422 of the masterbatch barrel supporting top plate 42. A portion of the tabs 20-2 facing the first end is inserted into the first slot, and a portion of the tabs 20-2 facing the second end is inserted into the second slot, thereby forming a limiting engagement.

The size and shape of the tabs 20-2 are configured to precisely match the gap formed by the first baffle 431 and the second baffle 432, so as to ensure a stable fit. The first baffle 431 and the second baffle 432 are perpendicular to the moving direction of the masterbatch barrel mounting portion 4 on the guide rail 3, ensuring that the masterbatch barrel does not shake or displace during movement. Moreover, the first baffle 431 and the second baffle 432 are parallel, which facilitates insertion of the tabs 20-2.

In one embodiment, the first end 421 and/or the second end 422 of the masterbatch barrel supporting top plate 42 are inclined upward in a vertical direction to ensure the stability of the masterbatch barrel 20 during movement, and the tabs 20-2 are inclined toward a surface of the masterbatch barrel supporting top plate 42, so as to engage with the upper top surface of the masterbatch barrel supporting top plate 42. The precise engagement between the tabs 20-2 and the masterbatch barrel supporting top plate 42 facilitates stable installation of the masterbatch barrel 20 and reduces shaking of the masterbatch barrel 20 during movement.

Specifically, the inclined angle of the tabs 20-2 facing the lower bottom surface of the masterbatch barrel supporting top plate 42 matches the inclined angle of the masterbatch barrel supporting top plate 42, so as to ensure a stable fit. The side of the tabs 20-2 facing the upper top surface of the barrel body 20-1 is required to remain horizontal to ensure the stability of the masterbatch barrel 20 and uniform distribution of the masterbatch paint inside the barrel, so that the discharge accuracy of the masterbatch paint is not affected. Moreover, the inclined arrangement helps evenly distribute pressure and friction, reducing wear between the masterbatch barrel 20 and the masterbatch barrel supporting top plate 42, and extending the service life of the apparatus.

In one embodiment, the first end 421 is defined as the rear end of the masterbatch barrel supporting top plate 42 along the moving direction, and the second end 422 is defined as the front end of the masterbatch barrel supporting top plate 42 along the moving direction. The masterbatch barrel supporting top plate 42 is inclined downward from the first end 421 to the second end 422, and the tabs 20-2 are inclined toward a surface of the masterbatch barrel supporting top plate 42, so as to engage with the upper top surface of the masterbatch barrel supporting top plate 42. When the masterbatch barrel 20 starts to move from a stationary state, the masterbatch barrel supporting top plate 42 inclined downward from the first end 421 to the second end 422 helps restrict displacement of the masterbatch barrel 20 and prevents the masterbatch barrel from moving excessively or deviating from the guide rail 3 under the action of inertia.

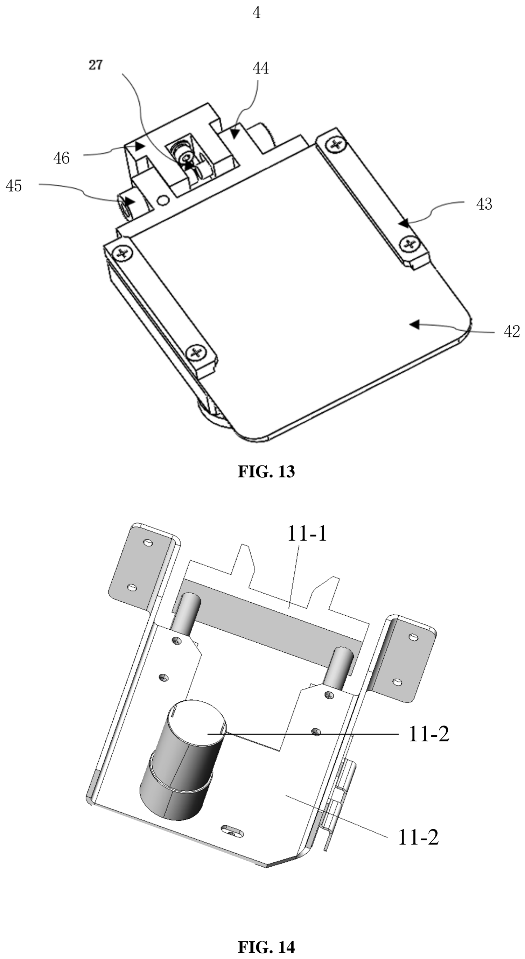

In one embodiment, as shown in FIGS. 12 and 13, the masterbatch barrel mounting portion 4 further includes a link connecting block 44, a connecting rod 45, and a connecting-rod fixing block 46. The link connecting block 44 is arranged at a first side of the masterbatch barrel supporting top plate 42 close to the conveying portion 6, and a limiting groove 47 is recessed on a second side of the link connecting block 44 away from the first side. The connecting rod 45 horizontally passes through a wall of the limiting groove 47. The connecting-rod fixing block 46 is fixed on the conveying portion 6, and the connecting-rod fixing block 46 is movably sleeved on the connecting rod and inserted into the limiting groove 47.

Specifically, the conveying portion 6 is connected to the link connecting block 46, so as to drive the masterbatch barrel mounting portion 4 to move on the guide rail 3 through the link connecting block 46. The conveying portion 6 transmits power smoothly and synchronously to the masterbatch barrel mounting portion 4, so as to ensure smooth movement of the masterbatch barrel mounting portion 4 along the guide rail 3 and to achieve precise conveying of the masterbatch barrel 20.

According to the masterbatch barrel conveying apparatus in the present invention, in a first aspect, the masterbatch barrel is limitedly engaged with the masterbatch barrel baffle 43 through the tabs 20-2 in a direction perpendicular to the moving direction. This design enables the masterbatch barrel to stably follow the masterbatch barrel mounting portion 4 to move on the guide rail 3, reducing possible shaking or displacement during conveying and thereby improving the stability of the entire conveying process. In a second aspect, the limiting engagement defined in the present invention is a rigid connection. Compared with the prior art using an elastic pressing plate, the rigid connection of the present invention eliminates fitting clearances between components, thereby avoiding negative effects on the dispensing accuracy of the masterbatch barrel.

In one embodiment, as shown in FIGS. 1 to 16, a color blending device is further provided. The color blending device includes the masterbatch barrel conveying apparatus as described above, a frame 1, a workbench 2, and a surrounding barrier 9 enclosing the masterbatch barrel mounting portion and the guide rail.

The workbench 2 is a horizontal plate, and the workbench 2 divides an internal space of the frame 1 into an upper portion and a lower portion. The guide rail 3, the conveying portion 6, and the masterbatch barrel mounting portion 4 are disposed on an upper surface of the workbench 2. A driving pulley and a driven pulley are respectively mounted on the horizontal workbench 2 at an inner side of the guide rail 3 through a rotating shaft 5-3 and a driven shaft, the rotating shaft 5-3 and the driven shaft are vertically located at centers of circular-arc sections of the guide rail 3, and the conveying portion 6 is disposed between the driving pulley and the driven pulley.

As shown in FIG. 5, the workbench 2 is disposed on the frame 1, and a material discharge hole 2-1 is provided on the workbench, to enable color paste in the masterbatch barrel located on the masterbatch barrel mounting portion to pass through the material discharge hole and enter a container below the workbench after being pumped out by a pumping mechanism when the masterbatch barrel mounting portion is located at a masterbatch barrel positioning location (i.e., a liquid-discharging location).

As shown in FIGS. 4 and 5, a surrounding barrier 9 having a shape corresponding to the guide rail 3 is further disposed on an upper surface of the horizontal workbench 2, and the surrounding barrier 9 surrounds the guide rail 3 and the masterbatch barrel mounting portion 4, which leaves openings only at material inlet and outlet ports on the horizontal workbench 2, to enable an operator to load and unload masterbatch barrels 9 on the masterbatch barrel mounting portion 4 from the openings.

In one embodiment, the color blending device further includes: a lifting platform located below the material discharge hole, where the lifting platform is configured to place a container for receiving color paste flowing from the masterbatch barrel.

As shown in FIGS. 1 and 4, a lifting platform 10 is disposed on the frame 1 below the material discharge hole 2-1, to enable an electronic scale 13 and/or a container 12 to be placed on the lifting platform 10. The lifting platform 10 includes a lifting mechanism configured to drive the lifting platform to move in a vertical direction. In other embodiments, the lifting platform 10 may be configured in other forms, in particular, the lifting mechanism of the lifting platform 10 can be replaced with other structural forms, such as a screw rod, a cylinder, or an oil cylinder.

The color blending device further includes a controller configured to receive external input information and various positional information in the color blending device, including a position of the clutch assembly measured by a first position sensor, and to control the color blending device to orderly complete a coating configuration process based on the information.

In one embodiment, the color blending device further includes an aligning assembly disposed at the masterbatch barrel positioning location.

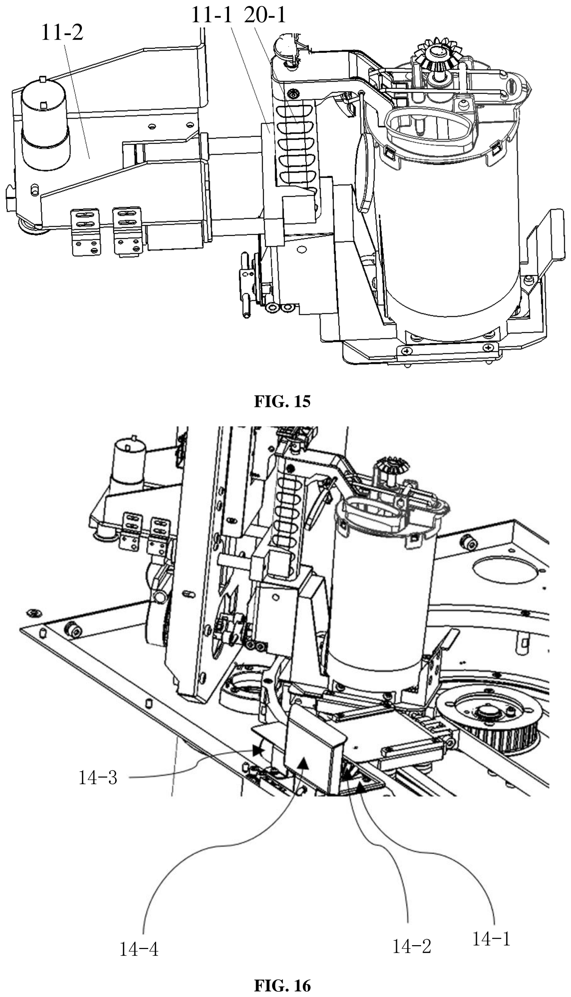

As shown in FIGS. 14 and 15, the aligning assembly 11 includes an aligning gripper 11-1 and an aligning motor 11-2 configured to drive the aligning gripper to move in a horizontal direction, and one end of the aligning gripper away from the aligning motor is provided with a tapered opening.

The masterbatch barrel 20 further includes a handle 20-3. When the masterbatch barrel mounting portion is located at the masterbatch barrel positioning location, the controller controls the aligning motor to operate, to drive the aligning gripper to move toward the masterbatch barrel, so that the handle 20-3 of the masterbatch barrel 20 on the masterbatch barrel mounting portion is located within a space of the tapered opening, and alignment of the masterbatch barrel is achieved through the tapered opening. Before the rotation of the masterbatch barrel is required, the controller controls the aligning motor to drive the aligning gripper away from the masterbatch barrel.

In one embodiment, as shown in FIGS. 4 and 16, the color blending device further includes a cleaning-box apparatus 14, the cleaning-box apparatus 14 is disposed on an upper surface of the workbench 2 within a space defined by the guide rail 3 and an inner side surface of the surrounding barrier 9. The cleaning-box apparatus 14 is configured to clean a masterbatch paint discharge port of the masterbatch barrel 20 after the masterbatch barrel 20 dispenses masterbatch paint. The cleaning-box apparatus 14 includes a box body 14-1 and a bristle roller 14-2, the box body 14-1 is configured to store a cleaning liquid, and the bristle roller 14-2 is disposed in the box body 14-1 to pick up the cleaning liquid and clean the masterbatch paint discharge port of the masterbatch barrel 20 through rolling.

In one embodiment, the cleaning-box apparatus 14 further includes a cleaning-box motor 14-3 disposed outside the box body 14-1, and the cleaning-box motor 14-3 drives the bristle roller 14-2 to rotate on the box body 14-1.

In one embodiment, a splash-preventing upright plate 14-4 is further provided on the outer edge of the cleaning-box apparatus 14 for preventing cleaning liquid from splashing out of the box body 14-1. The splash-preventing upright plate 14-4 can be configured as a foldable type or a fixed type, to accommodate different space and operational requirements. A liquid discharge port can further be disposed at a bottom of the box body 14-1 to discharge used cleaning liquid. The liquid discharge port can be equipped with a valve to control the discharge of the cleaning liquid. The liquid discharge port can further be connected to a liquid discharge conduit to guide the used cleaning liquid to a recovery container or a drainage system.

In a first aspect, the color blending device in the present invention reduces reliance on manual operation and lowers long-term labor costs by automatically moving the masterbatch barrel 20 for color blending through the masterbatch barrel conveying apparatus, and improves the efficiency of the color blending process. In a second aspect, the material discharge hole 2-1 on the workbench 2 allows masterbatch paint to flow accurately into a color blending container, which reduces waste and color deviation and improves color blending accuracy. In a third aspect, the openings on the surrounding barrier 9 enable an operator to conveniently load and unload masterbatch barrels on the masterbatch barrel mounting portion 4. In a fourth aspect, the surrounding barrier 9 provides a certain protective function for the masterbatch barrel during operation of the masterbatch barrel mounting portion 4 to prevent splashing. In a fifth aspect, the lifting platform 10 can be adjusted according to a height of the container, so that the masterbatch paint can flow smoothly into the color blending container. In a sixth aspect, the cleaning-box apparatus 14 can automatically clean the masterbatch paint discharge port of the masterbatch barrel 20 after the color blending process, which reduces the requirement for manual cleaning and improves cleaning efficiency. In a seventh aspect, the color blending device integrates multiple functions including masterbatch barrel conveying, material discharge, and cleaning, to make the color blending device more compact and save space.

In one embodiment, a color blending system is further provided. The color blending system includes the color blending device as described above and the masterbatch barrels mounted on the masterbatch barrel mounting portion of the color blending device.

The system is used as follows: an operator sequentially mounts the masterbatch barrels containing different color pastes onto the masterbatch barrel mounting portion 4 according to a recipe. In this case, the clutch body 8-7 is in a disconnected state, that is, the clutch body 8-7 disconnects the transmission between the wheel-set driving portion 7 and the rotating shaft 5-3, so that an operator can easily manually rotate the conveying portion 6 to quickly mount the masterbatch barrels onto the masterbatch barrel mounting portion 4. After completion of mounting, the clutch body 8-7 reconnects the transmission between the wheel-set driving portion 7 and the rotating shaft 5-3, and then the wheel-set driving portion 7 orderly drives the conveying portion 6 to rotate. The masterbatch barrels on the masterbatch barrel mounting portion 4 are sequentially brought to a liquid-discharging location, and the aligning motor 11-1 in the aligning assembly drives the aligning gripper 11-2 to right and position the masterbatch barrels. Then, the pumping mechanism on the color blending device dispenses the required color paste from the masterbatch barrels in an orderly and controllable manner. The dispensed color paste falls through the material discharge hole 2-1 into the container 12 below the horizontal workbench 2. After all required color paste is sequentially dispensed, the liquid in the container 12 is mixed evenly to obtain the desired automotive touch-up paint.

The system has the advantages of a simple structure, high efficiency, accurate dispensing, and low cost. During a single dispensing process, an operator only needs to rotate the masterbatch barrels once, after which the automotive touch-up paint can be automatically prepared according to a program. The system has a size between the above-described large and small color blending devices, which provides more flexible application scenarios.

As described above, some existing automatic dispensing devices still have certain deficiencies during practical application. For example, during conveying of a masterbatch barrel by a conveying module, an elastic pressing plate is adopted to fix the masterbatch barrel. Although this design fixes the masterbatch barrel to a certain extent, a fitting clearance existing between components affects the dispensing accuracy of masterbatch paint discharged under an action of a pumping mechanism. Therefore, designing a novel masterbatch barrel fixing structure to eliminate the fitting clearance between the components so as to improve the dispensing accuracy of the masterbatch paint has become a technical problem to be resolved urgently at present. In view of this, the present invention provides a masterbatch barrel conveying apparatus and a color blending device, which can eliminate fitting clearance between fixing components of the masterbatch barrel, thereby improving the dispensing accuracy of the masterbatch paint.

As shown in FIG. 17, the masterbatch barrel conveying apparatus 10 in this embodiment includes a rail 1, a slider portion 2, and a masterbatch barrel.

The rail 1 is a moving path for transporting the masterbatch barrel 3 by the slider portion 2, and can include a linear rail and/or a curved rail. The rail 1 can be configured as a closed rail or an open rail. It should be readily understood by those skilled in the art that the shape of the rail 1 can be reasonably configured according to actual design requirements.

The slider portion 2 includes a pulley assembly 21 sleeved on the rail 1, a masterbatch barrel supporting top plate 22 fixed on an upper top surface of the pulley assembly 21, and a masterbatch barrel baffle 23 arranged on the masterbatch barrel supporting top plate 22.

The masterbatch barrel 3 is arranged on an upper top surface of the masterbatch barrel supporting top plate 22, and includes a barrel body 31 and tabs 32 protruding from the barrel body 31. The tabs 32 achieve limiting engagement with the masterbatch barrel baffle 23 along a direction perpendicular to a moving direction, so that the masterbatch barrel 3 moves along the rail 1 with the slider portion 2.

In some embodiments, the rail 1 can be configured as a loop rail as shown in FIG. 18, and includes two semicircular rail sections and two linear rail sections, and the two semicircular rail sections are connected through the two linear rail sections. The loop rail is configured to enable the mounting of the masterbatch barrel at a fixed position and the removal of the masterbatch barrel 3 after dispensing masterbatch paint. The linear rail is configured to increase the number of masterbatch barrels 3 that can be mounted.

The slider portion 2 is configured to carry the masterbatch barrel 3 to move along the rail 1. The slider portion 2 includes a pulley assembly 21 for enabling movement, a masterbatch barrel supporting top plate 22 for carrying the masterbatch barrel 3, and a masterbatch barrel baffle 23 for fixing the masterbatch barrel 3.

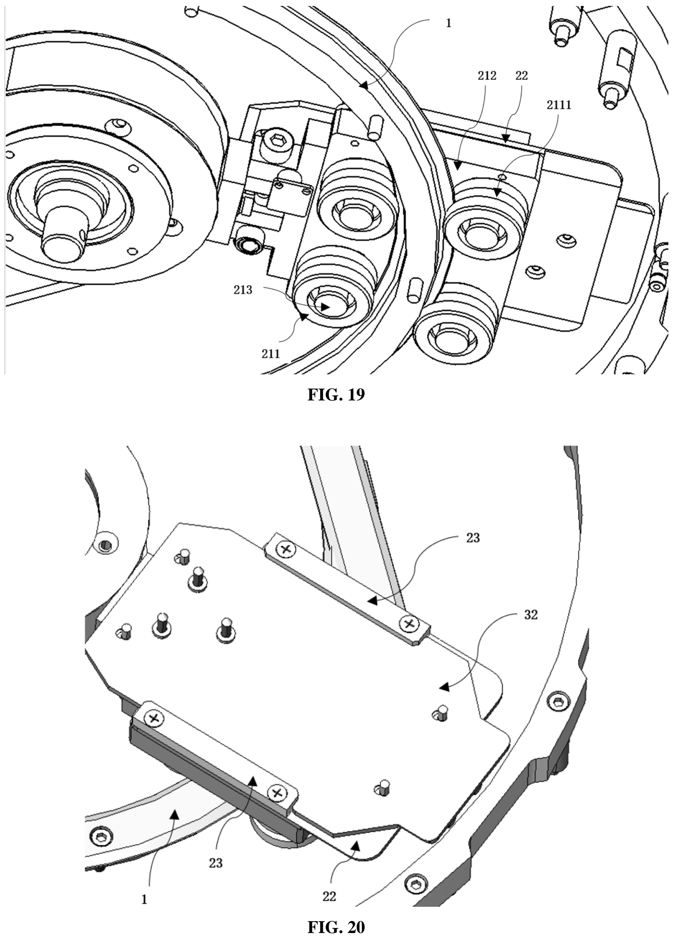

In some embodiments, as shown in FIG. 19, the pulley assembly 21 can include a plurality of bearings 211. Each bearing 211 is provided with a sliding groove 2111, a sliding groove 2111 of at least one bearing 211 is engaged with an inner side of the rail 1, and a sliding groove 2111 of at least another bearing 211 is engaged with an outer side of the rail 1. A sliding groove 2111 is annularly disposed on an outer peripheral surface of the bearing 211, and the sliding groove 2111 can be rectangular, V-shaped, or U-shaped, depending on a shape of the rail 1. With the engagement of the sliding groove 2111 with the inner and outer sides of the rail 1, the bearing 211 can roll or slide on the rail 1, thereby enabling movement of the pulley assembly 21.

In some embodiments, the pulley assembly 21 may further include a pulley fixing plate 212 and slider bearing shafts 213. The pulley fixing plate is configured to fix and support the entire pulley assembly 21, and the number of slider bearing shafts corresponds to the number of bearings 211, and the slider bearing shafts are protrudingly fixed to the lower bottom surface of the pulley fixing plate 212 for mounting the bearings 211.

The bearing 211 is sleeved on the protruding portion of the slider bearing shaft 213. This arrangement allows the bearing 211 to rotate freely on the slider bearing shaft 213 while being fixed to the pulley fixing plate 212 via the slider bearing shaft 213. In this embodiment, the pulley assembly 21 not only provides stable support and reduces friction, but also ensures that the slider portion 2 moves smoothly along the rail 1, thereby improving the efficiency and reliability of the entire masterbatch barrel conveying apparatus 10.

The masterbatch barrel 3 is a container for storing masterbatch paint, and includes a barrel body 31, a tab 32, and a handle 33. The barrel body 31 is a main portion of the masterbatch barrel 3 and is configured to store masterbatch paint; and the tabs 32 are provided at the bottom of the barrel body 31, with a portion of the tabs protruding horizontally from the barrel body 31. As shown in FIG. 20, the tab 32 is limitedly engaged with the masterbatch barrel baffle 23 in a horizontal direction perpendicular to a moving direction, to enable the masterbatch barrel 3 to stably move on the rail 1 with the slider portion 2, thereby reducing the shaking or displacement.

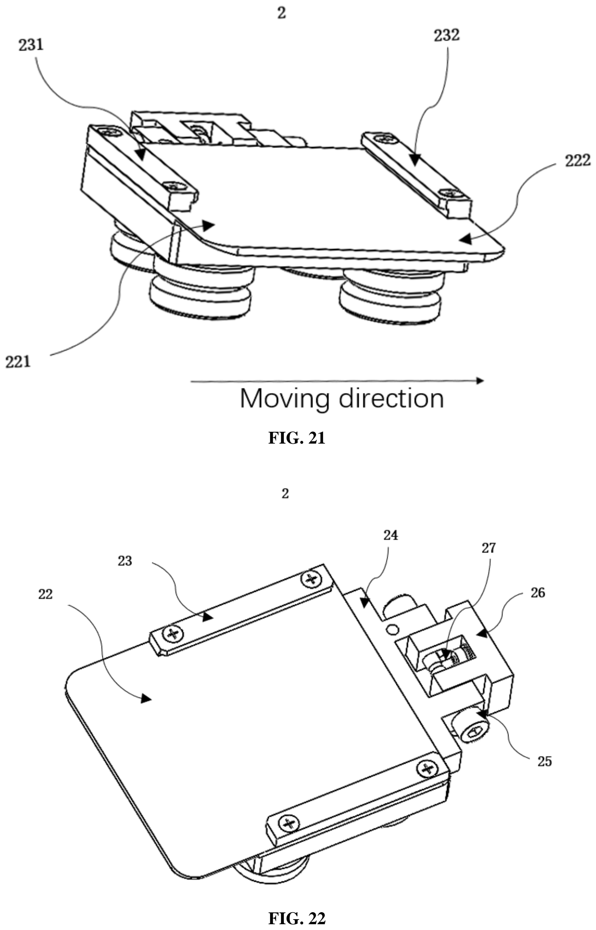

In some embodiments, as shown in FIG. 21, the masterbatch barrel baffle 23 includes a first baffle 231 disposed at a first end 221 of the masterbatch barrel supporting top plate 22 and a second baffle 232 disposed at a second end 222 of the masterbatch barrel supporting top plate 22. The first baffle 231 and the second baffle 232 are perpendicular to the moving direction of the slider portion 2 on the rail 1. The tabs 32 are inserted into the gap formed by the first baffle 231 and the second baffle 232, forming a limiting engagement.

Specifically, a slot is formed between the masterbatch barrel baffle 23 and the masterbatch barrel supporting top plate 22, and the tabs 32 are inserted into the slot between the masterbatch barrel baffle 23 and the masterbatch barrel supporting top plate 22, forming a limiting engagement. Further, a first slot is formed between the first baffle 231 and the first end 221 of the masterbatch barrel supporting top plate 22, and a second slot is formed between the second baffle 232 and the second end 222 of the masterbatch barrel supporting top plate 22. A portion of the tabs 32 facing the first end is inserted into the first slot, and a portion of the tabs 32 facing the second end is inserted into the second slot, thereby forming a limiting engagement.

The size and shape of the tabs 32 are configured to precisely match the gap formed by the first baffle 231 and the second baffle 232, so as to ensure a stable fit. The first baffle 231 and the second baffle 232 are perpendicular to the moving direction of the slider portion 2 on the rail 1, ensuring that the masterbatch barrel does not shake or displace during movement. Moreover, the first baffle 231 and the second baffle 232 are parallel, which facilitates insertion of the tabs 32.

In some embodiments, the first end 221 and/or the second end 222 of the masterbatch barrel supporting top plate 22 are inclined upward in a vertical direction to ensure the stability of the masterbatch barrel 3 during movement, and the tabs 32 are inclined toward a surface of the masterbatch barrel supporting top plate 22, so as to engage with the upper top surface of the masterbatch barrel supporting top plate 22. The precise engagement between the tabs 32 and the masterbatch barrel supporting top plate 22 facilitates stable installation of the masterbatch barrel 3 and reduces shaking of the masterbatch barrel 3 during movement. Specifically, the inclined angle of the tabs 32 facing the lower bottom surface of the masterbatch barrel supporting top plate 22 matches the inclined angle of the masterbatch barrel supporting top plate 22, so as to ensure a stable fit. The side of the tabs 32 facing the upper top surface of the barrel body 31 is required to remain horizontal to ensure the stability of the masterbatch barrel 3 and uniform distribution of the masterbatch paint inside the barrel, so that the discharge accuracy of the masterbatch paint is not affected. Moreover, the inclined arrangement helps evenly distribute pressure and friction, reducing wear between the masterbatch barrel 3 and the masterbatch barrel supporting top plate 22, and extending the service life of the apparatus.

In some embodiments, the first end 221 is defined as the rear end of the masterbatch barrel supporting top plate 22 along the moving direction, and the second end 222 is defined as the front end of the masterbatch barrel supporting top plate 22 along the moving direction. The masterbatch barrel supporting top plate 22 is inclined downward from the first end 221 to the second end 222, and the tabs 32 are inclined toward a surface of the masterbatch barrel supporting top plate 22, so as to engage with the upper top surface of the masterbatch barrel supporting top plate 22. When the masterbatch barrel 3 starts to move from a stationary state, the masterbatch barrel supporting top plate 22 inclined downward from the first end 221 to the second end 222 helps restrict displacement of the masterbatch barrel 3 and prevents the masterbatch barrel from moving excessively or deviating from the rail 1 under the action of inertia.

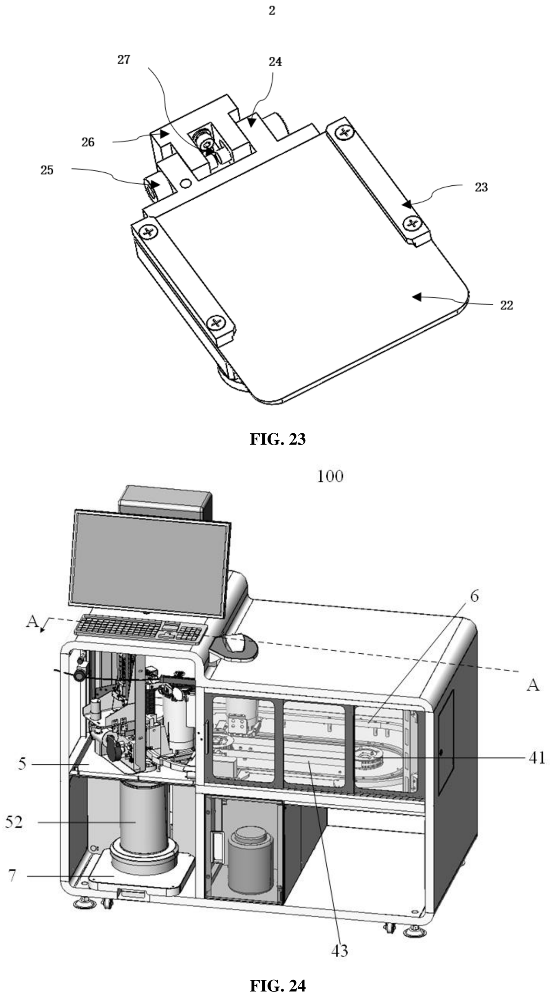

In some embodiments, the masterbatch barrel conveying apparatus 10 further includes a power member 4 configured to provide power for driving the slider portion 2 to move along the rail 1. As shown in FIGS. 22 and 23, the slider portion 2 further includes: a link connecting block 24 disposed on a first side of the masterbatch barrel supporting top plate 22 close to the power member 4, where the link connecting block 24 is provided with a limiting groove 27 recessed on a second side opposite the first side; a connecting rod 25 horizontally extending through a wall of the limiting groove 27; and a connecting-rod fixing block 26 fixed to the power member 4, where the connecting-rod fixing block 26 is movably sleeved on the connecting rod and inserted into the limiting groove 27, so that the slider portion 2 moves along the rail 1 under driving of the power member 4.

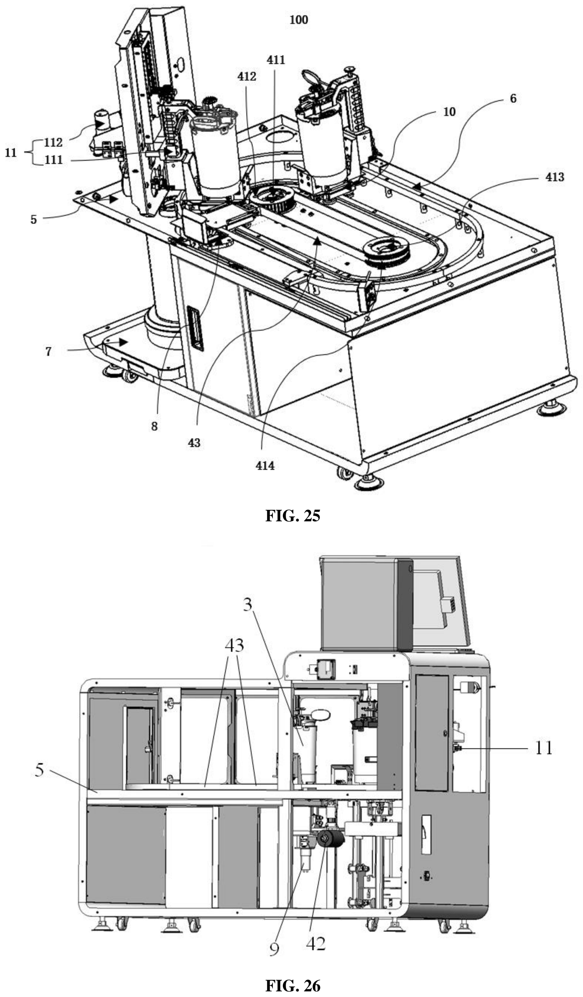

Specifically, as shown in FIG. 25, the power member 4 can include a driving wheel set 41, a wheel-set driving portion 42, and a synchronous belt 43 sleeved on the driving wheel set 41.

The wheel-set driving portion 42 includes a driving motor body 421 and a driving motor output shaft 422, and the driving motor body 421 may drive the driving motor output shaft 422 to rotate. The driving motor body 421 may specifically be a turbine-reduction motor.

The driving wheel set 41 includes a transmission shaft 411 connected to a driving motor output shaft 422, a driving pulley 412 sleeved on the transmission shaft 411, a driven shaft 413 connected to the transmission shaft via the synchronous belt 43, a driven pulley 414 sleeved on the driven shaft 413, and the synchronous belt 43. The transmission shaft 411 is configured to transmit power of the wheel-set driving portion 42 to the driving pulley 412, and the driving pulley 412 is in direct contact with the synchronous belt 43 to drive rotation of the synchronous belt 43. The driven shaft 413 follows rotation of the transmission shaft 411 to ensure tension of the synchronous belt 43. The driven pulley 414 is connected to the driven shaft 413 to maintain tension and synchronous operation of the synchronous belt 43.

The synchronous belt 43 is connected to the connecting-rod fixing block 26 to drive the slider portion 2 to move along the rail 1 through the connecting-rod fixing block 26. The synchronous belt 43 transmits power to the slider portion 2 smoothly and synchronously, to ensure that the slider portion 2 moves steadily along the rail 1 and achieve precise conveying of the masterbatch barrel 3.

It may be understood that the synchronous belt 43 has an outer side close to the rail 1 (away from the driving wheel set 41) and an inner side away from the rail 1 (close to the driving wheel set 41). The slider portion 2 is disposed on the outer side of the synchronous belt 43 within a space defined by the synchronous belt 43 and the surrounding barrier 6, and moves within this space. When a plurality of slider portions 2 are provided, each slider portion 2 can be disposed on the synchronous belt 43 either uniformly or non-uniformly.

In some embodiments, as shown in FIGS. 26 to 29, the masterbatch barrel conveying apparatus 10 further includes a clutch assembly 9 configured to separate and engage the driving wheel set 41 and the wheel-set driving portion 42, where the clutch assembly 9 includes a clutch motor 91 and a clutch body 92 connected to each other.

The clutch motor 91 drives the clutch body 92 to move in the vertical direction. When the clutch body moves to a first position, the driving motor output shaft 422 is transmission-connected to the transmission shaft 411 through the clutch body 92, the driving motor body 421 transmits power to the driving wheel set 41 via the clutch body 92, and the driving wheel set 41 rotates under driving of the driving motor body 421 and drives the synchronous belt 43 and the slider portion 2 to move along the rail 1. When the clutch body 92 moves to a second position, the clutch body 92 is disconnected from the driving motor output shaft 422 and/or the transmission shaft 411. In this case, the driving wheel set 41, the synchronous belt 43, and the slider portion 2 are no longer driven by the driving motor body, allowing an operator to manually rotate the synchronous belt 43. This design enables the conveying apparatus 10 to be flexibly started or stopped as needed, thereby enhancing the flexibility and reliability of the device.

In this design, the first position refers to a position where the transmission between the transmission shaft 411 and the driving motor output shaft 422 is disconnected, and when the clutch body 92 is in the first position, the clutch assembly 9 is in a disconnected state; the second position refers to the position where the transmission between the transmission shaft 411 and the driving motor output shaft 422 is connected, and when the clutch body 92 is in the second position, the clutch assembly 9 is in a connected state.

In one embodiment, the masterbatch barrel conveying apparatus 10 further includes a first position sensor configured to measure the position of the clutch assembly 9. The position measured by the first position sensor is acquired via the associated control component, allowing determination of whether the clutch body 92 has moved to the first position and/or second position, and determination of whether the driving wheel set 41 and the wheel-set driving portion 42 are in a separated state or a connected state.

Specifically, as shown in FIGS. 25 to 27, the driving wheel set 41, the synchronous belt 43, and the rail 1 are disposed on or near the same horizontal plane, and the clutch assembly 9 is located below the horizontal plane of the rail 1. The clutch body 92 is fixedly connected to the driving motor output shaft 422, and when the clutch motor 91 drives the clutch body 92 to move in the vertical direction, the driving motor output shaft 422 is synchronously driven to move in the vertical direction. In this case, when the clutch body 92 moves to a second position, the clutch body 92 is disconnected from the transmission shaft 411.

In the present invention, the masterbatch barrel conveying apparatus 10 allows the clutch assembly to be set to a disconnected state when an operator installs or removes a masterbatch barrel, thereby disconnecting transmission between the driving motor output shaft 422 and the transmission shaft 411. In this case, the operator can easily manually rotate the synchronous belt 43 to synchronously move the slider portion 2 near the operator's position, thereby rapidly installing the masterbatch barrel onto the slider portion or removing the masterbatch barrel from the slider portion. After installation of the masterbatch barrel, the clutch assembly is set to a connected state to achieve transmission connection of the driving motor output shaft to the transmission shaft 411. The driving motor body 421 then sequentially drives the transmission shaft 411 to rotate, thereby driving the synchronous belt 43 to rotate and moving the masterbatch barrel to a working position, with the masterbatch paint in the masterbatch barrel being dispensed in an orderly and controllable manner through a relevant pumping mechanism.

In one embodiment, the clutch assembly 9 further includes a screw rod 93 and a lifting portion arranged on the screw rod 93, the clutch body 92 is fixed on the lifting portion, and the clutch motor 91 drives the screw rod 93 to rotate so as to drive the lifting portion to move in a first direction.

The clutch assembly 9 may be mounted on the frame of the color blending device 100. The clutch motor 91 is positioned directly below the screw rod 93, with threads provided on the screw rod 93. One end of the lifting portion is provided with a threaded hole that matches the threads on the screw rod, and the lifting portion is mounted on the screw rod 93 through the threaded hole. The other end of the lifting portion is sleeved and fixed on the driving motor output shaft 422. The clutch motor 91 drives the screw rod 93 to rotate. Under the rotation of the screw rod 93, the lifting portion moves in the vertical direction, thereby driving the wheel-set driving portion 42 to move up and down synchronously. When the lifting portion moves upward from the second position to the first position, the upper end of the lifting portion is sleeved on the transmission shaft 411 and fixed to the transmission shaft 411. When the driving motor output shaft rotates, the rotation of the transmission shaft 411 is achieved through the transmission of the lifting portion. The lifting portion may be a single integrated component or may be assembled from a plurality of components.

In one embodiment, the clutch assembly further includes a holding rod 94 parallel to the screw rod 93; and the lifting portion includes a screw-nut seat 95 and a fixing plate 96 fixedly connected to the screw-nut seat 95, the screw-nut seat 95 is passed by the screw rod 93 and the holding rod 94, and the fixing plate 96 is fixedly connected to the driving motor body 421 and the clutch body 92.

The clutch assembly 9 further includes a mounting frame 97, and a vertical screw rod 93 and a holding rod 94 arranged parallel thereto are provided in the mounting frame 97. The mounting frame 97 is provided with a clutch motor 91 that drives the rotation of the screw rod 93. A screw-nut seat 95 is sleeved between the screw rod 93 and the holding rod 94, and the screw-nut seat 95 moves up and down within the mounting frame 97 as the screw rod 93 rotates under the drive of the clutch motor 91.

The two first sensors are respectively positioned on the upper top surface and the lower bottom surface of the mounting frame 97, and are configured to measure the position of the screw-nut seat 95. The position of the screw-nut seat 95 may be the height of the screw-nut seat 95 or the distance from the upper top surface and/or the lower bottom surface. Since the position of the screw-nut seat 95 is relatively fixed with the position of the clutch body 92, the position of the clutch body 92 may be obtained once the position of the screw-nut seat 95 is obtained.

A fixing plate 96 is mounted on the screw-nut seat 95, and a wheel-set driving portion 42 is fixed on the fixing plate 96. Specifically, the wheel-set driving portion 42 may pass through a hole in the fixing plate 96, allowing the driving motor output shaft 422 of the wheel-set driving portion 42 to extend from the upper side of the fixing plate 96. The clutch body 92 is positioned at the upper end of the fixing plate 96 and is sleeved on the driving motor output shaft 422.

The output shaft of the driving motor body 421 and the lower end of the transmission shaft 411 are transmitted through the clutch body 92. The clutch body 92 may controllably disconnect and connect the transmission between the driving motor body 421 and the transmission shaft 411 under the driving of the fixing plate 96 in the up-and-down direction. The clutch body 92 is fixed to the transmission shaft 411 by means of engagement or threaded connection during upward movement to the first position, and is separated from the transmission shaft 411 during downward movement to the second position.

When the masterbatch barrel needs to be mounted on the slider portion 2, the clutch body 92 disconnects the transmission between the driving motor body 421 and the transmission shaft 411. In this case, an operator can manually rotate the synchronous belt 43 to quickly install the masterbatch barrel module onto the slider portion 2 on the synchronous belt 43. After installation is complete, the clutch body 92 reconnects the transmission between the driving motor body 421 and the transmission shaft 411, and then the driving motor body 421 orderly drives the synchronous belt 43 to rotate.

According to the masterbatch barrel conveying apparatus in the present invention, in a first aspect, the masterbatch barrel is limitedly engaged with the masterbatch barrel baffle 23 through the tabs 32 in a direction perpendicular to the moving direction. This design enables the masterbatch barrel to stably follow the slider portion 2 to move on the rail 1, reducing possible shaking or displacement during conveying and thereby improving the stability of the entire conveying process. In a second aspect, the limiting engagement defined in the present invention is a rigid connection. Compared with the prior art using an elastic pressing plate, the rigid connection of the present invention eliminates fitting clearances between components, thereby avoiding negative effects on the dispensing accuracy of the masterbatch barrel.

As shown in FIGS. 18 and 24, a color blending device 100 is further provided. The color blending device 100 includes: the masterbatch barrel conveying apparatus according to any one of the above embodiments; a workbench 5 provided with a material discharge hole 51, configured to support the color blending process and allow masterbatch paint to flow out through the material discharge hole 51; and a surrounding barrier 6 fixed on the workbench 5, where the surrounding barrier 6 encloses the masterbatch barrel conveying apparatus, and the surrounding barrier 6 has an opening at a masterbatch barrel positioning location, so that an operator can load and unload masterbatch barrels 3 on the slider portion 2 through the opening. During operation of the slider portion 2, an inner side surface of the surrounding barrier 6 provides a displacement-preventing function for an outer side surface of the masterbatch barrel 3.

In some embodiments, the color blending device 100 further includes: a lifting platform 7 located below the material discharge hole 51, where the lifting platform 7 is configured to place a container for receiving masterbatch paint flowing from the masterbatch barrel. The lifting platform 7 can be configured as a hydraulic type, a pneumatic type, or an electric type, to accommodate different loads and operational requirements. The lifting platform 7 may move vertically as needed, to adapt to containers of different heights and ensure that the masterbatch paint can flow smoothly into the containers. The lifting platform 7 can further include a positioning mechanism, to ensure alignment of the container with the material discharge hole 51 and prevent spillage or leakage of the masterbatch paint.

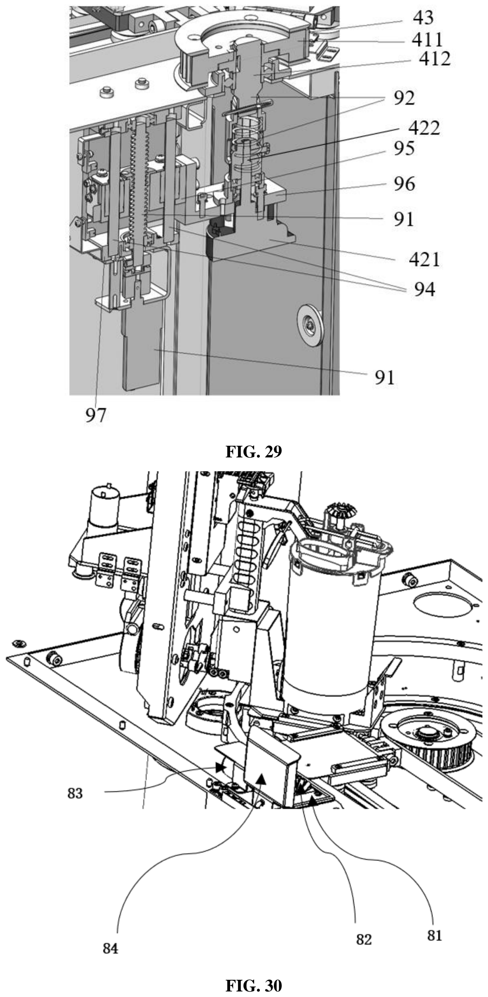

In some embodiments, as shown in FIG. 30, a cleaning-box apparatus 8 is further disposed on an upper surface of the workbench 5, within a space defined by the rail 1 and an inner side surface of the surrounding barrier 6, and is configured to clean a masterbatch paint discharge port of the masterbatch barrel 3 after the masterbatch barrel 3 dispenses masterbatch paint. The cleaning-box apparatus 8 may include a box body 81 and a bristle roller 82. The box body 81 is configured to store a cleaning liquid, and the bristle roller is disposed in the box body 81 to pick up the cleaning liquid and clean the masterbatch paint discharge port of the masterbatch barrel 3 through rolling.

In some embodiments, the cleaning-box apparatus 8 further includes a cleaning-box motor 83 disposed outside the box body 81, and the cleaning-box motor 83 drives the bristle roller 82 to rotate on the box body 81.

In some embodiments, a splash-preventing upright plate 84 is further provided on the outer edge of the cleaning-box apparatus 8 for preventing cleaning liquid from splashing out of the box body 81. The splash-preventing upright plate 84 can be configured as a foldable type or a fixed type, to accommodate different space and operational requirements. A liquid discharge port can further be disposed at a bottom of the box body 81 to discharge used cleaning liquid. The liquid discharge port can be equipped with a valve to control the discharge of the cleaning liquid. The liquid discharge port can further be connected to a liquid discharge conduit to guide the used cleaning liquid to a recovery container or a drainage system.

In one embodiment, the color blending device 100 further includes an aligning assembly 11 disposed at the masterbatch barrel positioning location.

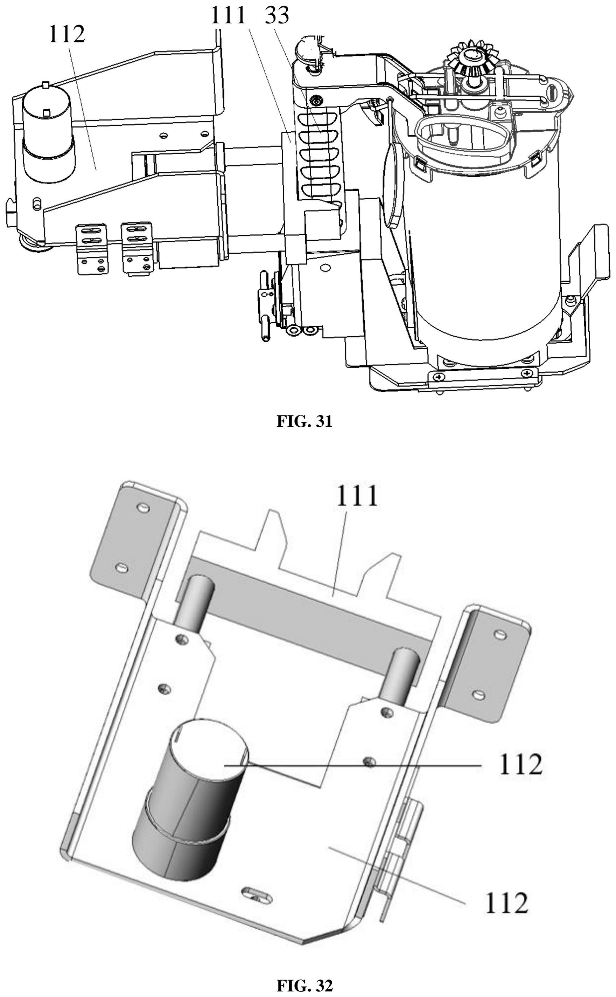

As shown in FIGS. 31 and 32, the aligning assembly 11 includes an aligning gripper 111 and an aligning motor 112 configured to drive the aligning gripper 111 to move in a horizontal direction, and one end of the aligning gripper 111 away from the aligning motor 112 is provided with a tapered opening.

The masterbatch barrel 3 further includes a handle 33. When the slider portion 2 is located at the masterbatch barrel positioning location, the controller controls the aligning motor 112 to operate, to drive the aligning gripper 111 to move toward the masterbatch barrel 3, so that the handle 33 of the masterbatch barrel 3 on the slider portion 2 is located within a space of the tapered opening, and alignment of the masterbatch barrel is achieved through the tapered opening. Before the rotation of the masterbatch barrel is required, the controller controls the aligning motor 112 to drive the aligning gripper 111 away from the masterbatch barrel 3.

The device is used as follows: an operator sequentially mounts the masterbatch barrels containing different masterbatch paints onto the slider portion 2 according to a recipe. In this case, the clutch body 92 is in a disconnected state, that is, the clutch body 92 disconnects the transmission between the wheel-set driving portion 42 and the transmission shaft 411, so that an operator can easily manually rotate the synchronous belt 43 to quickly mount the masterbatch barrels onto the slider portion 2. After completion of mounting, the clutch body 92 reconnects the transmission between the wheel-set driving portion 42 and the transmission shaft 411, and then the wheel-set driving portion 42 orderly drives the synchronous belt 43 to rotate. The masterbatch barrels on the slider portion 2 are sequentially brought to the masterbatch barrel positioning location (liquid-discharging location), and the aligning motor 111 in the aligning assembly drives the aligning gripper 112 to right and position the masterbatch barrels. Then, the pumping mechanism on the color blending device 100 dispenses the required masterbatch paint from the masterbatch barrels in an orderly and controllable manner. The dispensed masterbatch paint falls through the material discharge hole 51 into the container 52 below the horizontal workbench 5. After all required masterbatch paint is sequentially dispensed, the liquid in the container 52 is mixed evenly to obtain the desired automotive touch-up paint.

In a first aspect, the color blending device in the present invention reduces reliance on manual operation and lowers long-term labor costs by automatically moving the masterbatch barrel 3 for color blending through the masterbatch barrel conveying apparatus, and improves the efficiency of the color blending process. In a second aspect, the material discharge hole 51 on the workbench 5 allows masterbatch paint to flow accurately into a color blending container 52, which reduces waste and color deviation and improves color blending accuracy. In a third aspect, the openings on the surrounding barrier 6 enable an operator to conveniently load and unload masterbatch barrels on the slider portion 2. In a fourth aspect, the surrounding barrier 6 provides a certain protective function for the masterbatch barrel during operation of the slider portion 2 to prevent splashing. In a fifth aspect, the lifting platform 7 can be adjusted according to a height of the container, so that the masterbatch paint can flow smoothly into the color blending container. In a sixth aspect, the cleaning-box apparatus 8 can automatically clean the masterbatch paint discharge port of the masterbatch barrel 3 after the color blending process, which reduces the requirement for manual cleaning and improves cleaning efficiency. In a seventh aspect, this embodiment integrates multiple functions including masterbatch barrel conveying, material discharge, and cleaning, to make the color blending device 100 more compact and save space.

As described above, traditional color blenders generally adopt a mechanical stopping apparatus such as a limit switch to ensure accurate stopping of a masterbatch barrel when the masterbatch barrel moves to a liquid-discharging position. However, the mechanical stopping apparatus becomes worn after long-term use, leading to reduced stopping accuracy. Therefore, existing color blenders have the disadvantage of low stopping accuracy of the masterbatch barrel. In view of this, the present invention provides a masterbatch barrel righting and positioning apparatus and a color blending device, which can accurately right the masterbatch barrel to a preset liquid-discharging position even when the stop position of the masterbatch barrel lacks sufficient precision.

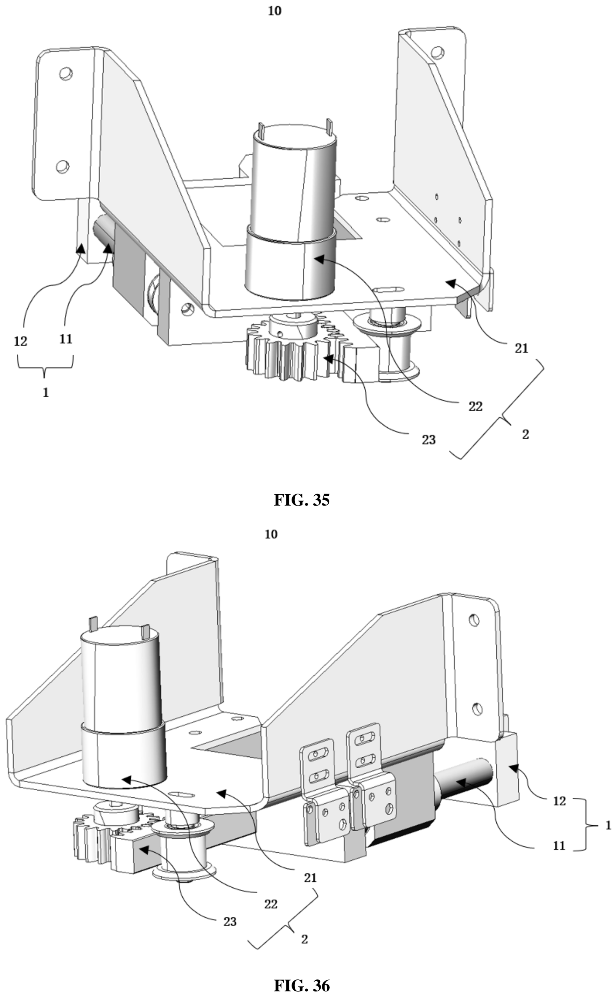

As shown in FIGS. 35 to 38, a masterbatch barrel righting and positioning apparatus 10 is provided. The masterbatch barrel righting and positioning apparatus 10 is applied to a color blending device 100, and the masterbatch barrel righting and positioning apparatus 10 includes a righting gripper assembly 1 and a driving portion 2.

The aligning gripper assembly 1 includes a side wall 11 and a gripper portion 12 fixed on the side wall 11, where one end of the gripper portion 12 away from the side wall 11 is provided with a tapered opening 123. The driving portion 2 is connected to the side wall 11 and is configured to drive the side wall 11 to extend and retract in a first direction, when the side wall 11 extends, the gripper portion 12 abuts a handle 61 of a masterbatch barrel 6 positioned on the color blending device and rights the masterbatch barrel 6 to a preset liquid-discharging position within a space defined by the tapered opening 123.

The side wall 11 is fixed on the driving portion 2. The side wall 11 and the driving portion 2 can be fixed together through a mechanical connection, such as bolts or welding. The driving portion 2 is configured to drive the side wall 11 to extend and retract in a first direction, thereby driving the gripper portion 12 to perform a righting operation. The first direction is a horizontal direction perpendicular to the handle 61 of the masterbatch barrel 6, and more specifically, perpendicular to the direction of the rail when the masterbatch barrel 6 is positioned at the masterbatch barrel positioning location.

The gripper portion 12 is fixed on the side wall 11. The gripper portion 12 and the side wall 11 can be integrally formed, or can be fixed together by welding or bolting. When the driving portion 2 drives the side wall 11 to move, the gripper portion 12 is driven to move synchronously. When the gripper portion 12 extends in the first direction, the gripper portion can accurately contact the handle 61 of the masterbatch barrel 6 at the masterbatch barrel positioning location, and guide the masterbatch barrel 6 to a preset liquid-discharging position through the tapered opening 123. The tapered opening 123 gradually widens from a first port away from the side wall 11 toward a second port closer to the side wall 11. During the extension of the gripper portion 12 in the first direction, the handle 61 of the masterbatch barrel 6 is accommodated within the space enclosed by the tapered opening 123. Since the opening of the second port is smaller than that of the first port, the movable space of the handle 61 of the masterbatch barrel 6 gradually decreases while being enclosed by the gripper portion 12, thereby limiting the masterbatch barrel 6 by the tapered opening 123 to the preset liquid-discharging position.

The masterbatch barrel positioning location refers to the position where the masterbatch barrel is in an in-place state on the color blending device. The masterbatch barrel is driven by the conveying portion 4 on the color blending device 100 to the masterbatch barrel positioning location, so as to facilitate corresponding operations. Since relying solely on the conveying portion 4 for transport cannot achieve precise positioning, the masterbatch barrel at the masterbatch barrel positioning location delivered by the conveying portion 4 is usually not accurately stopped at the preset liquid-discharging position, but rather at a nearby position with a certain range of deviation from the liquid-discharging position. Therefore, the masterbatch barrel 6 needs to be righted to the liquid-discharging position, so as to facilitate subsequent pumping of color paste from the masterbatch barrel 6.

In this embodiment, when the side wall 11 is in a retracted state, the gripper portion 12 is away from the handle of the masterbatch barrel. When the driving portion 2 is activated, the driving portion 2 drives the side wall 11 to extend in the first direction. The side wall 11 drives the gripper portion 12 to approach the handle 61 of the masterbatch barrel 6. When the side wall 11 is fully extended, the tapered opening 123 of the gripper portion 12 contacts the handle 61 of the masterbatch barrel 6. The tapered opening 123 of the gripper portion 12 limits the handle 61 of the masterbatch barrel 6, thereby righting the masterbatch barrel 6 to the preset liquid-discharging position. After the righting is completed, the driving portion 2 operates in the reverse direction, driving the side wall 11 to retract, and the gripper portion 12 accordingly moves away from the handle 61 of the masterbatch barrel 6.

According to the masterbatch barrel righting and positioning apparatus 10 of the present invention, the righting gripper assembly 1 is controlled by the driving portion 2 to extend and retract in the first direction, thereby controlling stable contact and separation between the gripper portion 12 and the handle 61 of the masterbatch barrel 6. By providing the gripper portion 12 with the tapered opening 123, when the gripper portion 12 extends, the handle 61 of the masterbatch barrel 6 is limited within the space formed by the tapered opening 123, and the masterbatch barrel 6 is stably righted to the preset liquid-discharging position within the limitation of the space formed by the tapered opening 123. This achieves the positioning and righting of the masterbatch barrel 6, improves the positioning accuracy of the masterbatch barrel 6, and facilitates subsequent smooth pumping of color paste.

In one embodiment, the righting gripper assembly 1 includes a crossbeam 121 fixed on the side wall 11 and two forward-extending arms 122 extending forward from one end of the crossbeam 121 away from the side wall 11. The two forward-extending arms 122 and the crossbeam 121 form the tapered opening 123.

The crossbeam 121 is fixed on the side wall 11 to support the forward-extending arms 122, thereby ensuring the stability of the forward-extending arms 122. The crossbeam 121 and the side wall 11 can be connected by welding or bolting.

The forward-extending arms 122 extend forward from one end of the crossbeam 121 away from the side wall 11. The forward-extending arms 122 and the crossbeam 121 can be integrally formed, or can be connected by welding or bolting. The two forward-extending arms 122 and the crossbeam 121 together form the tapered opening 123, which is configured to grasp the handle 61 of the masterbatch barrel 6 and right the masterbatch barrel 6.

In this embodiment, the configuration of the crossbeam 121 and the forward-extending arms 122 ensures the stability of the gripper portion 12, preventing shaking and deviation during the righting process.

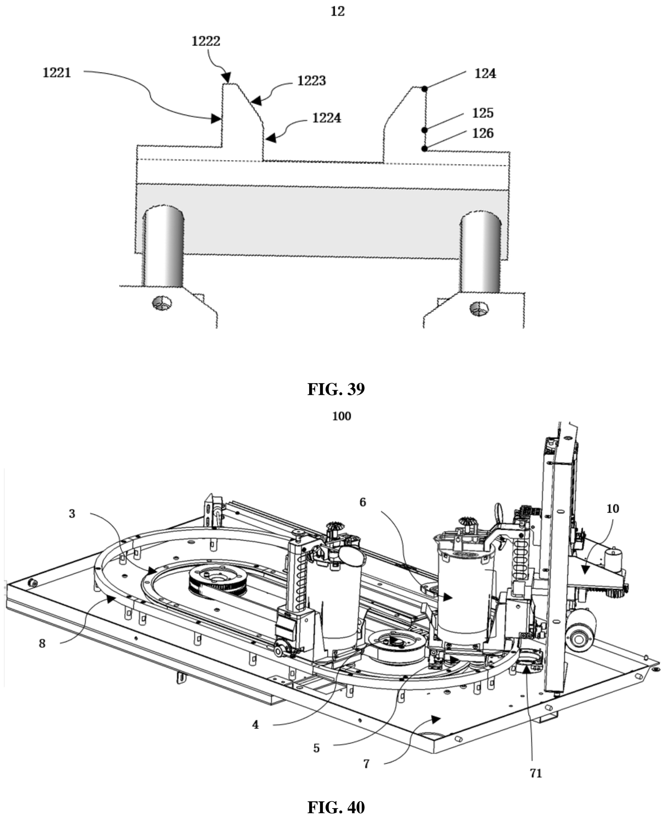

In one embodiment, as shown in FIG. 39, the two forward-extending arms 122 are engaged with the handle of the masterbatch barrel in a clamping manner. The first gap width of the two forward-extending arms 122 at the first position 124 is greater than the second gap width at the second position 125, and the first distance from the first position 124 to the crossbeam 121 is greater than the second distance from the second position 125 to the crossbeam 121.

In this embodiment, the space profile formed by the two forward-extending arms 122 enclosing the handle of the masterbatch barrel matches the outer profile of the handle, thereby enabling engagement with the handle. Taking the handle of the masterbatch barrel as having a generally cuboid shape as an example, the two forward-extending arms 122 engaged with the handle of the masterbatch barrel in a clamping manner are parallel to each other. Since the opposite surfaces of one end of the two parallel forward-extending arms 122 facing away from the crossbeam 121 are both provided with a tapered surface, at the first position 124, which is at the first distance farthest from the crossbeam 121 indicated by the dashed line, the first gap width between the two forward-extending arms 122 is the largest. At the second position 125, which is closer to the crossbeam 121 at the dashed line, the second gap width between the two forward-extending arms 122 is smaller. The first gap width is greater than the second gap width. If a third position 126 is further set at a third distance from the crossbeam 121 indicated by the dashed line, which is smaller than the second distance, the third gap width between the two forward-extending arms 122 at the third position 126 is equal to the second gap width at the second position 125.

In some embodiments, the side wall 11 includes a first side wall and a second side wall that are parallel to each other, the first side wall is fixed to a first end of the crossbeam 121, and the second side wall is fixed to a second end of the crossbeam 121. The parallel design of the first side wall and the second side wall enables the two forward-extending arms 122 to maintain a consistent spacing at different positions, which ensures the overall stability and balance of the masterbatch barrel righting and positioning apparatus 10, and prevents shaking and deviation during the righting process. Meanwhile, two ends of the crossbeam 121 are fixed to the first side wall and the second side wall, respectively, which enhances the stability and strength of the crossbeam 121, thereby ensuring the normal operation of the forward-extending arms 122.

In one embodiment, each forward-extending arm 122 includes an outer end surface 1221, a distal end surface 1222 away from the crossbeam 121, an inclined surface 1223, and an inner end surface 1224 connected in sequence. The crossbeam 121 and the inclined surfaces 1223 and inner end surfaces 1224 of the two forward-extending arms 122 together enclose to form the tapered opening 123.

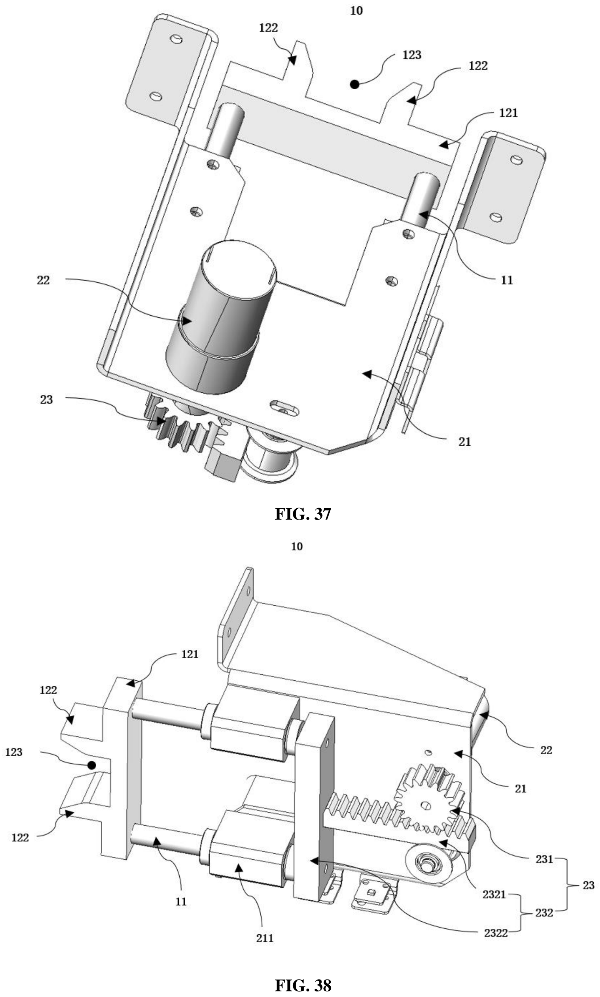

In one embodiment, as shown in FIG. 38, the driving portion 2 includes:
a support panel 21 connected to the side wall 11;
a driving motor 22 fixed to the support panel 21;
a gear set 23 connected to the driving motor 22, where the gear set 23 drives the aligning gripper assembly 1 to extend and retract in the first direction under driving of the driving motor 22.

The support panel 21 provides a mounting platform, ensuring that the components of the driving portion 2 and the side wall 11 can be securely installed on the support panel 21.

The driving motor 22 is configured to provide power to drive the operation of the gear set 23. The driving motor 22 can be fixed on the support panel 21 by bolts.

The gear set 23 is configured to drive the righting gripper assembly 1 to extend and retract in the first direction under the driving of the driving motor 22. The gear set 23 can be fixed on the support panel 21 by bearings.

In some embodiments, different extension and retraction speeds can be achieved by adjusting the transmission ratio of the gear set 23.

In this embodiment, the secure installation of the support panel 21 and the driving motor 22 ensures the stability of the driving portion 2, and prevents shaking and deviation during movement. The design of the gear set 23 ensures high transmission accuracy and the precise movement of the righting gripper assembly 1.

In one embodiment, the support panel 21 is provided with a side wall accommodating portion 211, and the side wall 11 extends and retracts along the first direction in the side wall accommodating portion 211. The gear set 23 includes a gear 231 connected to the driving motor 22 and a rack portion 232 meshing with the gear 231. The driving motor 22 drives the gear 231 to rotate, causing the rack portion 232 to extend and retract in the first direction under the rotation of the gear 231. The side wall 11 abuts the rack portion 232 and moves in the first direction along with the rack portion 232.

In this embodiment, the side wall accommodating portion 211 is configured to provide a movement path for the side wall 11, ensuring that the side wall 11 extends and retracts smoothly in the first direction. The side wall accommodating portion 211 may be a groove or a guide rail fixed on the lower bottom surface of the support panel 21, in which the side wall 11 slides to reduce friction and wear.

The meshing between the gear 231 and the rack portion 232 in this embodiment ensures high transmission accuracy, guaranteeing the precise movement of the side wall 11.

In some embodiments, the rack portion 232 includes a rack 2321 arranged along the first direction and a pushing beam 2322 vertically fixed to the rack 2321, and the side wall accommodating portion 211 defines an accommodating hole of side wall 11, and the side wall 11 is inserted through the side wall accommodating hole and is fixedly connected to the pushing beam 2322.

In this embodiment, the pushing beam 2322 is configured to fix the side wall 11, which ensures that the side wall 11 moves together with the rack portion 232.

In this embodiment, the side wall accommodating hole is configured to provide a movement path for the side wall 11, ensuring that the side wall 11 extends and retracts smoothly in the first direction.

In some embodiments, the masterbatch barrel righting and positioning apparatus 10 further includes a position detecting portion configured to detect an extension position of the righting gripper assembly 1. The position detecting portion may be a photoelectric sensor, a proximity switch, or another type of sensor and is mounted at an appropriate position for monitoring a movement position of the righting gripper assembly 1, thereby improving automation and accuracy of the masterbatch barrel righting and positioning apparatus 10.

As shown in FIGS. 40 to 43, the present invention further provides a color blending device 100. The color blending device 100 includes the masterbatch barrel righting and positioning apparatus 10 according to any one of the above embodiments, a rail 3, a masterbatch barrel mounting portion 5 sleeved on the rail 3, and a conveying portion 4 connected to the masterbatch barrel mounting portion 5. When the masterbatch barrel mounting portion 5 moves to a masterbatch barrel positioning location with the conveying portion 4, the masterbatch barrel righting and positioning apparatus 10 rights a masterbatch barrel 6 to a preset liquid-discharging position.

The rail 3 is a moving path for transporting the masterbatch barrel 6 by the masterbatch barrel mounting portion 5, and the guide rail may include a linear rail and/or a curved rail, and may be configured as a closed path or an open path. It should be readily understood by those skilled in the art that the shape of the rail 3 can be reasonably configured according to actual design requirements.

The masterbatch barrel mounting portion 5 is configured for carrying a masterbatch barrel 6 to move along the rail 3, which includes a pulley assembly 51 for enabling movement, a masterbatch barrel supporting top plate 52 for carrying the masterbatch barrel 6, and a masterbatch barrel baffle 53 for fixing the masterbatch barrel 6.

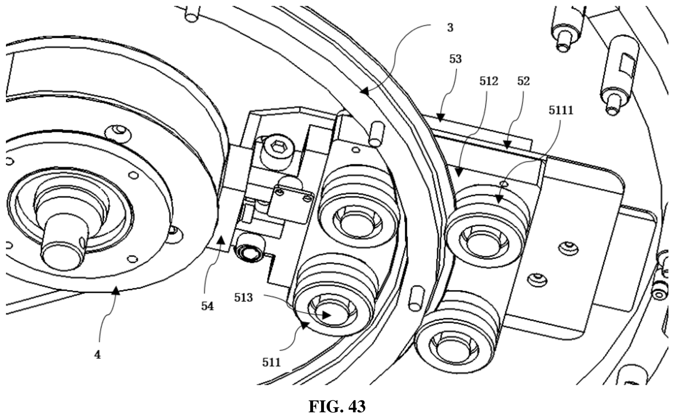

In some embodiments, as shown in FIG. 43, a pulley assembly 51 may include a plurality of pulleys 511, each of the pulleys 511 is provided with a sliding groove 5111, where a sliding groove 5111 of at least one of the pulleys 511 is engaged on an inner side of the rail 3, and a sliding groove 5111 of at least another of the pulleys 511 is engaged on an outer side of the rail 3. A sliding groove 5111 is annularly disposed on an outer peripheral surface of the pulley 511, and the sliding groove 5111 can be rectangular, V-shaped, or U-shaped, depending on a shape of the rail 3. With the engagement of the sliding groove 5111 with the inner and outer sides of the rail 3, the pulley 511 can roll or slide on the rail 3, thereby enabling movement of the pulley assembly 51.

In some embodiments, the pulley assembly 51 may further include a pulley fixing plate 512 and slider bearing shafts 513. The pulley fixing plate is configured to fix and support the entire pulley assembly 51, and the number of slider bearing shafts corresponds to the number of pulleys 511, and the slider bearing shafts are protrudingly fixed to the lower bottom surface of the pulley fixing plate 512 for mounting the pulleys 511. The pulley 511 is sleeved on the protruding portion of the slider bearing shaft 513. This arrangement allows the pulley 511 to rotate freely on the slider bearing shaft 513 while being fixed to the pulley fixing plate 512 via the slider bearing shaft 513. In this embodiment, the pulley assembly 51 not only provides stable support and reduces friction, but also ensures that the masterbatch barrel mounting portion 5 moves smoothly along the rail 3, thereby improving the efficiency and reliability of the entire masterbatch barrel righting and positioning apparatus 10.

In some embodiments, the pulley assembly 51 may further include a traction assembly 54. One end of the traction assembly is connected to one side of the masterbatch barrel supporting top plate 52 close to the conveying portion 4, and the other end is connected to the conveying portion 4, for pulling the masterbatch barrel mounting portion 5 to move with the conveying portion 4.

In this embodiment, a masterbatch barrel 6 disposed on an upper top surface of the masterbatch barrel supporting top plate 52 includes a handle 61 protruding from the barrel body and a tab 62, and the tab 62 is limitedly engaged with the masterbatch barrel baffle 53 along a direction perpendicular to a moving direction, so that the masterbatch barrel 6 moves along the rail 3 with the masterbatch barrel mounting portion 5.

In this embodiment, the conveying portion 4 may include a driving unit, a transmission shaft 41 connected to the driving unit, a driving pulley 42 sleeved on the transmission shaft 41, a driven shaft 43 connected to the transmission shaft through a synchronous belt 45, a driven pulley 44 sleeved on the driven shaft 43, and the synchronous belt 45. The transmission shaft 41 is configured to transmit power of the driving unit to the driving pulley 42, and the driving pulley 42 is in direct contact with the synchronous belt 45 to drive rotation of the synchronous belt 45. The driven shaft 43 follows rotation of the transmission shaft 41 to ensure tension of the synchronous belt 45. The driven pulley 44 is connected to the driven shaft 43 to maintain tension and synchronous operation of the synchronous belt 45. The synchronous belt 45 is connected to the traction assembly 54 for driving the masterbatch barrel mounting portion 5 to move along the rail 3 through the traction assembly 54. In this embodiment, the synchronous belt 45 transmits power to the masterbatch barrel mounting portion 5 smoothly and synchronously, which ensures that the masterbatch barrel mounting portion 5 moves steadily along the rail 3, and achieves precise conveying of the masterbatch barrel 6.

In one embodiment, the color blending device 100 further includes a workbench 7 provided with a material discharge hole 71, and a surrounding barrier 8 fixed on the workbench 7, where the surrounding barrier 8 encloses the rail 3 and defines an opening at the preset liquid-discharging position.

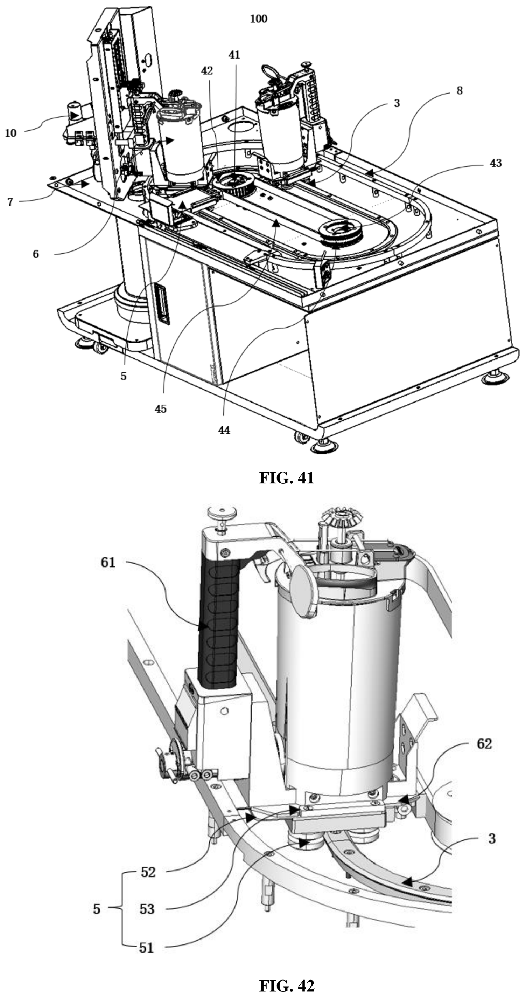

In this embodiment, as shown in FIGS. 40 and 41, the rail 3 may be a circular ring rail, specifically a circular ring rail having semicircular ends and a linear middle portion. The surrounding barrier 8 is disposed outside the rail 3 for enclosing the rail 3 and for allowing the masterbatch barrel to move within a space enclosed by the rail 3 and the surrounding barrier 8. The preset liquid-discharging position is disposed above the material discharge hole 71.

The surrounding barrier 8 defines an opening at the preset liquid-discharging position, so that an operator can load or unload the masterbatch barrel 6 on the masterbatch barrel mounting portion 5 through the opening. During operation of the masterbatch barrel mounting portion 5, an inner side surface of the surrounding barrier 8 provides a displacement-preventing function for an outer side surface of the masterbatch barrel 6.

Although the embodiments of the present invention have been shown and described above, it is to be understood that the above embodiments are exemplary and are not to be construed as limiting the present invention, and that modifications, variations, substitutions, and equivalents can be made to the above embodiments by those of ordinary skill in the art within the scope of the present invention.

### INDUSTRIAL APPLICABILITY

In the present invention, the masterbatch barrel conveying apparatus, the color blending device, and the color blending system allow the clutch assembly to be set to a disconnected state when an operator installs or removes a masterbatch barrel, thereby disconnecting transmission between the driving motor output shaft and the rotating shaft. In this case, the operator can easily manually rotate the conveying portion to synchronously move the masterbatch barrel mounting portion near the operator's position, thereby rapidly installing the masterbatch barrel onto the masterbatch barrel mounting portion or removing the masterbatch barrel from the masterbatch barrel mounting portion. After installation of the masterbatch barrel, the clutch assembly is set to a connected state to achieve transmission connection of the driving motor output shaft to the rotating shaft. The driving motor body then sequentially drives the rotating shaft to rotate, thereby driving the conveying portion to rotate and moving the masterbatch barrel to a working position, with the color paste in the masterbatch barrel being dispensed in an orderly and controllable manner through a relevant pumping mechanism. The above masterbatch barrel conveying apparatus is simple and flexible to operate, which improves both the flexibility and efficiency of the installation and removal of the masterbatch barrel.

In the present invention, the masterbatch barrel is limitedly engaged with the masterbatch barrel baffle through the tabs in a direction perpendicular to the moving direction. This design enables the masterbatch barrel to stably follow the slider portion to move along the rail, reducing possible shaking or displacement during conveying and thereby improving the stability of the entire conveying process. Moreover, the limiting engagement defined in the present invention is a rigid connection. Compared with the prior art using an elastic pressing plate, the rigid connection of the present invention eliminates fitting clearances between components, thereby avoiding negative effects on the dispensing accuracy of the masterbatch barrel.

The masterbatch barrel righting and positioning apparatus in the present invention, through cooperation between the driving portion and the gripper portion, can accurately right the masterbatch barrel to a preset liquid-discharging position even when the stop position of the masterbatch barrel lacks sufficient precision. In addition, the tapered opening of the gripper portion ensures stable contact between the gripper portion and the handle of the masterbatch barrel, preventing shaking or deviation during the righting process.

## Claims

1. A masterbatch barrel conveying apparatus (10), comprising:
a guide rail (3);
a driving wheel set (5) having a rotating shaft (5-3);
a conveying portion (6) sleeved on the driving wheel set (5);
a masterbatch barrel mounting portion (4) fixed on the conveying portion (6), wherein the conveying portion (6) moves along the guide rail (3) under driving of the driving wheel set (5), so as to drive the masterbatch barrel mounting portion (4) to move synchronously along the guide rail (3);
a wheel-set driving portion (7), comprising a driving motor body (7-1) and a driving motor output shaft (7-2); and
a clutch assembly (8) configured to separate and engage the driving wheel set (5) and the wheel-set driving portion (7), wherein the clutch assembly (8) comprises a clutch motor (8-4) and a clutch body (8-7) connected to each other;
the clutch motor (8-4) drives the clutch body (8-7) to move in a vertical direction, when the clutch body (8-7) moves to a first position, the driving motor output shaft (7-2) and the rotating shaft (5-3) achieve a transmission connection through the clutch body (8-7), and the driving wheel set (5) rotates under driving of the driving motor body (7-1); and when the clutch body (8-7) moves to a second position, the clutch body (8-7) is disconnected from the driving motor output shaft (7-2) and/or the rotating shaft (5-3).

2. The masterbatch barrel conveying apparatus (10) according to claim 1, wherein when the clutch body (8-7) moves to the second position, the clutch body (8-7) is disconnected from the rotating shaft (5-3).

3. The masterbatch barrel conveying apparatus (10) according to claim 2, wherein the clutch assembly (8) further comprises a screw rod (8-2) and a lifting portion arranged on the screw rod (8-2), the clutch body (8-7) is fixed on the lifting portion, and the clutch motor (8-4) drives the screw rod (8-2) to rotate so as to drive the lifting portion to move in a first direction.

4. The masterbatch barrel conveying apparatus (10) according to claim 3, wherein the clutch assembly (8) further comprises a holding rod (8-3) parallel to the screw rod (8-2); and
the lifting portion comprises a screw-nut seat (8-5) and a fixing plate (8-6) fixedly connected to the screw-nut seat (8-5), the screw-nut seat (8-5) is passed by the screw rod (8-2) and the holding rod (8-3), and the fixing plate (8-6) is fixedly connected to the driving motor body (7-1) and the clutch body (8-7).

5. The masterbatch barrel conveying apparatus (10) according to any one of claims 1 to 4, wherein the guide rail (3) comprises a first semicircular section, a first linear section, a second semicircular section, and a second linear section connected in sequence;
the driving wheel set (5) further comprises a driven wheel (5-2) and a driving wheel (5-1) connected to the rotating shaft (5-3), the driving wheel (5-1) is located at a center of a circle of the first semicircular section, and the driven wheel (5-2) is located at a center of a circle of the second semicircular section; and
the conveying portion (6) is sleeved on the driving wheel (5-1) and the driven wheel (5-2).

6. The masterbatch barrel conveying apparatus (10) according to any one of claims 1 to 4, wherein the masterbatch barrel conveying apparatus (10) further comprises:
a first position sensor configured to measure a position of the clutch assembly (8).

7. A color blending device (100), comprising:
the masterbatch barrel conveying apparatus (10) according to any one of claims 1 to 6;
a workbench (2) provided with a material discharge hole (2-1); and
a surrounding barrier (9) fixed on the workbench (2), wherein the surrounding barrier (9) encloses the masterbatch barrel mounting portion (4) and the guide rail (3), and the surrounding barrier (9) is provided with an opening at a masterbatch barrel positioning location,
preferably, further comprising:
a lifting platform (10) located below the material discharge hole (2-1), wherein the lifting platform (10) is configured to place a container (12) for receiving color paste flowing from the masterbatch barrel (20);
preferably, further comprising:
an aligning assembly (11) arranged at the masterbatch barrel positioning location, wherein the aligning assembly (11) comprises an aligning gripper (11-1) and an aligning motor (11-2) configured to drive the aligning gripper (11-1) to move in a horizontal direction, and one end of the aligning gripper (11-1) away from the aligning motor (11-2) is provided with a tapered opening.

8. A color blending system, comprising:
the color blending device (100) according to claim 7; and
a masterbatch barrel (20) mounted on the masterbatch barrel mounting portion (4) of the color blending device (100).

9. The masterbatch barrel conveying apparatus (10) according to claim 1, wherein the masterbatch barrel mounting portion (2) comprises a pulley assembly (21) sleeved on the guide rail (1), a masterbatch barrel supporting top plate (22) fixed on an upper top surface of the pulley assembly (21), and a masterbatch barrel baffle (23) arranged on the masterbatch barrel supporting top plate (22); and
a masterbatch barrel (3) arranged on an upper top surface of the masterbatch barrel supporting top plate (22) comprises a barrel body (31) and tabs (32) protruding from the barrel body (31), and the tabs (32) achieve limiting engagement with the masterbatch barrel baffle (23) along a direction perpendicular to a moving direction, so that the masterbatch barrel (3) moves along the guide rail (1) with the masterbatch barrel mounting portion (2).

10. The masterbatch barrel conveying apparatus (10) according to claim 9, wherein the masterbatch barrel baffle (23) comprises a first baffle (231) arranged at a first end of the masterbatch barrel supporting top plate (22) and a second baffle (232) arranged at a second end of the masterbatch barrel supporting top plate (22), and the first baffle (231) and the second baffle (232) are perpendicular to a moving direction of the masterbatch barrel mounting portion (2) on the guide rail (1); and
the tabs (32) are inserted into a gap formed by the first baffle (231) and the second baffle (232), to form limiting engagement.

11. The masterbatch barrel conveying apparatus (10) according to claim 9, wherein the masterbatch barrel conveying apparatus (10) further comprises a power member (4), and the masterbatch barrel mounting portion (2) further comprises:
a link connecting block (24), arranged at a first side of the masterbatch barrel supporting top plate (22) close to the power member (4), and a limiting groove (27) is recessed on a second side of the link connecting block (24) away from the first side;
a connecting rod (25), horizontally passing through a wall of the limiting groove (27); and
a connecting-rod fixing block (26) fixed on the power member (4), wherein the connecting-rod fixing block (26) is movably sleeved on the connecting rod (25) and inserted into the limiting groove (27), and the masterbatch barrel mounting portion (2) moves along the guide rail (1) under driving of the power member (4).

12. The masterbatch barrel conveying apparatus (10) according to claim 9, wherein the pulley assembly (21) comprises a plurality of bearings (211), each bearing (211) is provided with a sliding groove (2111), a sliding groove (2111) of at least one bearing (211) is engaged with an inner side of the guide rail (1), and a sliding groove (2111) of at least another bearing (211) is engaged with an outer side of the guide rail (1),
preferably, wherein the pulley assembly (21) further comprises:
a pulley fixing plate (212); and
slider bearing shafts (213), protrudingly fixed on a lower bottom surface of the pulley fixing plate (212), wherein a number of the slider bearing shafts (213) corresponds to a number of the bearings (211); and
the bearings (211) are passed by protruding portions of the slider bearing shafts (213).

13. The masterbatch barrel conveying apparatus (10) according to claim 9, wherein the guide rail (1) is a circular guide rail, the circular guide rail comprises two semicircular guide rail sections and two linear guide rail sections, and the two semicircular guide rail sections are connected through the two linear guide rail sections.

14. The color blending device (100) according to claim 7, further comprising an aligning assembly (10), wherein the aligning assembly (10) comprises:
an aligning gripper (1), comprising a side wall (11) and a gripper portion (12) fixed on the side wall (11), wherein one end of the gripper portion (12) away from the side wall (11) is provided with a tapered opening (123); and
a driving portion (2) connected to the side wall (11), wherein the driving portion (2) is configured to drive the side wall (11) to extend and retract in a first direction, when the side wall (11) extends, the gripper portion (12) abuts a handle (61) of a masterbatch barrel (6) on the masterbatch barrel positioning location positioned on the color blending device (100) and rights the masterbatch barrel (6) to a preset liquid-discharging position within a space defined by the tapered opening (123).

15. The color blending device (100) according to claim 14, wherein the aligning gripper (1) comprises a crossbeam (121) fixed on the side wall (11) and two forward-extending arms (122) extending forward from one end of the crossbeam (121) away from the side wall (11), wherein the two forward-extending arms (122) and the crossbeam (121) form the tapered opening (123),
preferably, wherein the two forward-extending arms (122) are engaged with the handle (61) of the masterbatch barrel (6) in a clamping manner, a first gap width of the two forward-extending arms (122) at a first position (124) is greater than a second gap width at a second position (125), and a first distance from the first position (124) to the crossbeam (121) is greater than a second distance from the second position (125) to the crossbeam (121);
preferably, wherein each of the forward-extending arms (122) comprises an outer end surface (1221), a distal end surface (1222) away from the crossbeam (121), an inclined surface (1223), and an inner end surface (1224) connected in sequence, and the crossbeam (121) and inclined surfaces (1223) and inner end surfaces (1224) of the two forward-extending arms (122) enclose to form the tapered opening (123).
